(19) Europäisches Patentamt
European Patent Office
Office européen des brevets

(11) Publication number : **0 423 891 B1**

(12) **EUROPEAN PATENT SPECIFICATION**

(45) Date of publication of patent specification : **13.09.95 Bulletin 95/37**

(51) Int. Cl.$^6$ : **G21K 4/00,** G03C 5/16, C09K 11/06

(21) Application number : **90202732.5**

(22) Date of filing : **15.10.90**

(54) **Method for recording and detecting a pattern of ionizing radiation.**

(30) Priority : **20.10.89 EP 89202676**

(43) Date of publication of application : **24.04.91 Bulletin 91/17**

(45) Publication of the grant of the patent : **13.09.95 Bulletin 95/37**

(84) Designated Contracting States : **BE DE FR GB**

(56) References cited :
**EP-A- 0 101 295**
**EP-A- 0 209 186**
**DE-A- 1 901 259**
**DATABASE DERWENT WORLD PATENT INDEX, AN 78-77001a, "Dye image recording process - using material contg. two silver halide(s) with different grain sizes; and irradiating in contact with fluorescent intensifier"; & JP-A-53 106125**

(73) Proprietor : **AGFA-GEVAERT naamloze vennootschap**
**Septestraat 27**
**B-2640 Mortsel (BE)**

(72) Inventor : **Van den Bogaert, Jan Adrianus**
**De Rest 21**
**B-2970 Schilde (BE)**
Inventor : **Leenders, Luc Herwig**
**Lichtaartsesteenweg**
**B-2200 Herentals (BE)**
Inventor : **Janssens, Wilhelmus**
**De Egdstraat 11**
**B-3201 Aarschot (BE)**
Inventor : **Beels, Roland François**
**Kleistraat 34**
**B-2630 Aartselaar (BE)**
Inventor : **Verbeke, Gentil**
**Jachtlaan 48**
**B-2650 Edegem (BE)**

EP 0 423 891 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

1. Field of the Invention

This invention relates to a method for recording an image of ionizing radiation in the form of a pattern of (a) luminescent compound(s) the luminescence of which is stimulated to produce a pattern of fluorescent light that is detected.

2. Background of the invention

In US-P 3,859,527 a method of producing a recorded image corresponding to a releasably stored image of a pattern of high energy radiation has been claimed, wherein the method comprises the steps of :

releasing the stored image as emitted light on a point by point basis and converting the image into electrical energy modulated in accordance with the point by point intensity of the light emitted;

converting the modulated electrical energy into correspondingly modulated light, and

recording an image with said modulated light that represents the high energy radiation pattern on a point by point basis. In said process the medium for releasably storing an image representative of the pattern of high energy radiation is a storage phosphor transparent to its own emitted radiation. Examples of applied phosphors are SrS:Ce,Sm and $La_2O_2S$:Eu,Sm.

According to US-P 4,239,968 the storage phosphors elected for stimulable radiography with visible light or infra-red light are europium doped alkaline earth metal fluorohalide phosphors represented by the general formula $(Ba_{1-x}M_x^{II})FXyA$, representatives of which such as BaFBr:Eu have been described already in GB-P 1 419 169 for use in X-ray intensifying screens.

According to Radiology, Volume 171, No. 2, May 1989, p. 301 the image resolution obtained with stimulable phosphor panels scanned with a laser beam for producing stimulated light emission that is detected and amplified by photomultiplier is approximately only 2.5 line pairs per millimeter, whereas with classical X-ray image intensifying screens more than 5 line pairs can be reproduced.

Photostimulable phosphors do not permanently retain the stored energy, normally the storage time is not longer than 8 hours during which the stored energy image fades gradually. The stored image cannot be stimulated repeatedly which makes it impossible to produce a series of read-out patterns.

Known stimulable phosphors such as BaFBr:$Eu^{2+}$ have response times of the order of 0.5 microseconds which limits the maximum rate at which the information can be scanned with a laser beam without impairing the spatial resolution.

A particular point to be noted when using stimulable storage phosphor screens is their property to accumulate the ionizing energy coming from the environment, which is particularly disadvantageous when radiographs have to be made in circumstances of increased radioactivity, e.g. due to a nuclear incident. The classical radiographic X-ray intensifying screen-silver halide emulsion film combination will also fail in such circumstances because of the fact that penetrating ionizing radiation emitted in the environment will produce accumulated fog in highly photosensitive silver halide emulsion materials used in X-ray recording with X-ray conversion screens.

Up till now no convenient and efficient solution to that problem has been found.

In US-P 3,719,571 and 3,801,782 processes and materials are described for storage and retrieval of information comprising the use of non-fluorescent material capable of photoconversion to a fluorescent material under light of a particular wavelength and which can be made to fluoresce, after such conversion, by stimulating light of radiation of a longer wavelength, hereby forming a fluorescent image that is detected. The storage of information in that way is rapid, accurate and dry.

In US-P 4,030,926 a storage medium for optical data recording is described which medium contains a dye-forming combination which on exposure to light within a first range of wavelengths reacts irreversibly to form a dye, but is substantially insensitive to light within a second range of wavelengths that is capable of energizing the dye to produce luminescence. An example of dye forming combination by means of which a latent luminescence image can be produced is on the basis of benzofuran and dibromomaleic anhydride. In the latter US-P has been said that both the recording of the information as well as the reading of it, can be carried out simultaneously or succesively, depending on whether the recording layer is energized to luminescence either simultaneously over a wide area or succesively by line-by-line scanning by means of ultra-violet light within the second range of wavelengths. For this purpose a laser beam may be used, e.g. the emission radiation of certain nobel gas lasers such as $Ar^+$ or $Kr^+$ lasers.

In US-P 4,543,308 a photographic recording process is described wherein photo-sensitive silver halide is used to produce a latent luminescence image (for the most part of an opposite gradation) to the developed

silver image. According to said US-P the production of the latent luminescent image is based to some extent on the image-wise quenching of the luminescence of the compound capable of luminescence by the silver image produced during development.

3. Summary of the invention

It is an object of the present invention to provide a method for recording and storing an image of ionizing radiation also called high energy radiation by forming a latent luminescent image showing no or very small dark-decay in photostimulability, having the property of fluorescent light emission as long as the stimulation lasts with no limit in time and offering the possibility of multiple read-out.

It is likewise an object of the present invention to provide a method for recording and storing an image of ionizing radiation by forming a luminescent image that can be read out within very short stimulation times in the order of less than 0.1 microsecond.

It is a further object of the present invention to provide a method for recording and storing an image of ionizing radiation wherein the obtained image has good image quality with regard to resolution and graininess.

It is another object of the present invention to provide such method by forming a latent luminescent image that can be transformed photoelectronically into digitized signals that can be stored in a memory medium and displayed on an electronic display device, e.g. a cathode ray tube or used to modulate printing light, e.g. of a laser beam.

It is still another object of the present invention to provide a combination of elements by means of which a pattern of ionizing radiation can be recorded as a latent luminescent image that can be photostimulated without limit in time and of which the fluorescent light energy can be transduced into electrical signals that can be digitized and stored.

Other objects and advantages of the present invention will become clear from the following description.

In accordance with the present invention a method for recording an image of ionizing radiation is provided which method comprises the steps of :

(1) image-wise exposing to ionizing radiation an element containing at least one phosphor that converts said ionizing radiation into photochemically active radiation,

(2) image-wise exposing a recording material to the thus obtained photochemically active radiation, said recording material containing uniformly distributed (a) photo-quenchable luminescent compound(s) and/or (a) luminescent compound(s) in combination with (an) inorganic and/or organic compound(s) yielding by the action or intermediary of said photochemically active radiation (a) substance(s) reducing or quenching the luminescence of the latter luminescent compound(s), forming through said image-wise exposure a latent luminescent image of residual luminescent compound(s) in said recording material,

(3) exposing said latent image to radiation stimulating the fluorescent light emission of said residual luminescent compound(s), and

(4) detecting a pattern of fluorescent light produced by said exposure to stimulating radiation.

Further in accordance with the present invention a method for recording an image of ionizing radiation is provided which method comprises the steps of :

(1) image-wise exposing to ionizing radiation a recording material containing non-differentially distributed therein (a) luminescent compound(s) and (an) inorganic and/or organic compound(s) yielding through the direct action or intermediary of said ionizing radiation (a) substance(s) reducing or quenching the luminescence of said luminescent compound(s) resulting in a latent luminescent image of residual luminescent compound(s) in said recording material,

(2) exposing said latent image to radiation stimulating the fluorescent light emission of said residual luminescent compound(s), and

(3) detecting a pattern of fluorescent light produced by said exposure to stimulating radiation.

According to a particular embodiment said inorganic compounds for producing said quenching substances are non-silver halide compounds, preferably metal compounds that can split off halide photolytically and wherein the metal has an atomic number of at least 80.

By the wording ionizing radiation in the present description is understood X-ray radiation, Gamma ray radiation, fast electron radiation, e.g. of cathode ray tube, Beta-ray radiation and neutron radiation. Said ionizing radiation is also known under the name high energy radiation.

In the last mentioned exposure step (1) the ionizing radiation is photochemically active radiation that exposes the recording element without the intermediary of an element containing at least one phosphor.

Further in accordance with the present invention a combination suitable for radiography is provided comprising (1) at least one fluorescent screen containing at least one phosphor layer capable of emitting photochemically active radiation when irradiated by ionizing radiation, and 2) a photosensitive recording material

containing non-differentially (a) photo-quenchable luminescent compound(s) and/or (a) luminescent compound(s) in combination with compound(s) yielding by the action of said photochemically active radiation (a) compound(s) reducing or quenching the luminescence of said luminescent compound(s), the luminescence of which can be stimulated by radiation having a wavelength or wavelength range differing from the wavelength or wavelength range of the photochemically active radiation emitted by said screen(s).

By photochemically active radiation emitted by said phospor layer is understood ultraviolet, visible and infrared radiation, in particular electromagnetic radiation in the wavelength range of 250 to 750 nm. Thus, according to the present invention in the image-wise exposure stage (1) phosphor screens are used that convert ionizing radiation into light situated in the 250 to 750 nm wavelength range.

As is commonly known photochemical systems that are originally only sensitive to ultraviolet radiation, i.e. to 250 to 400 nm wavelength radiation, can be spectrally sensitized to become sensitive to visible light and/or infrared radiation by using appropriate spectral sensitizing agents.

The terminology "luminescent" relates to "fluorescent" and "phosphorescent" as well; the phenomenon of fluorescence being restricted to fluorescent light emission that stops almost immediately (within less than 1 millisecond) after the photostimulation, whereas phosphorescence lasts much longer and may be in the order of seconds and even hours.

4. Brief description of the drawings.

Fig. 1 represents a cross-sectional schematic drawing of an apparatus for recording and reading-out of an image produced by ionizing radiation according to the present invention.

Fig. 2 represents the light emission spectrum obtained on X-ray exposure of a tantalate phosphor used in Example 1.

5. Detailed description of the invention.

The present invention will hereinbelow be described in further detail.

Known phosphors suitable for use according to the present invention are listed in the following Table 1 wherein they are grouped according to their main emission colour or main emission peak (nm).

TABLE 1

| UV | | Blue | Green | Red |
|---|---|---|---|---|
| $(Y,Sr,Li)TaO_4$:Nb | 390 | $CaWO_4$ 425 | $Gd_2O_2S$:Tb 544 | $Gd_2O_2S$:Eu 611 |
| $(Y,Sr,Li,Gd)TaO_4$ | 315 | $LaOB_r$:Tb | $Y_2O_2S$:Tb 544 | $YTaO_4$:Eu 611 |
| $YTaO_4$:Tm | 325-400 | $BaSO_4$:Sr,Eu | $Y_2O_5$:Tb 544 | $Y_2O_2S$:Eu 611 |
| $YTaO_4$:Nb | 325-400 | | La2O2S:Tb 544 | $(Y,Sr,Li)TaO_4$:Eu |
| $YTaO_4$ | 315-400 | | (Zn,Cd)S:Ag 530 | |
| $(Y,Sr,Li)TaO_4$ | 325 | | | |
| BaFCl:Eu | 390 | | | |
| BaFBr:Eu | 390 | | | |
| $Y_2O_2S$:Gd | 315 | | | |

The use of mixtures of these phosphors is within the scope of the present invention.

The above mentioned tantalate phosphors can be prepared by a method described in published European Patent applications No. 0 011 909 or 0 202 875.

Suitable short wavelength UV-emitting phosphors are lead-activated strontium haloborates described by A. Meijerink et al., in Journal of Solid State Chemistry 76, 115-123 (1988) which phosphors have an emission situated at about 280 nm. Other useful short wavelength UV-emitting phosphors are lead-activated Ba,Zn silicates described in Dutch Patent 104 632. These phosphors have emission peaks at 290 and 305 nm. Further

examples of long wavelength UV-emitting phosphors, also called near ultraviolet region emitting phosphors, are given in US-P 3,702,828 relating to europium-activated barium and strontium, calcium, aluminum fluoride phosphors with sharp UV emission at 360 nm.

In the preparation of fluorescent screens the phosphors used according to the present invention are incorporated in particulate form in a binder material known for that purpose to those skilled in the art. The binder layer incorporating the dispersed phosphor particles is usually applied onto a sheet support, e.g. cardboard, resin base or metal support, e.g. aluminium. The phosphor binder layer may contain screening dyes to improve the image sharpness and the phosphor layer may be applied on a light reflecting base for improving the light output.

A usual phosphor coverage is in the range of 100 g/m2 to 1500 g/m2.

Examples of suitable luminescent compounds and quenching substances (quenchers) that can be photochemically formed are listed in the following Table 2.

TABLE 2

| Luminescent compound | Quencher |
|---|---|
| Acridinium ion | $Br^-$ ions, $Co^{2+}$ ions |
| eosine | $H^+$, at pH lower than 4 |
| fluoresceine | $H^+$, at pH lower than 4 |
| uranyl sulphate | HCl |
| resorufin (sodium salt) | HBr or HI |
| 9,10-dihydroxy-anthracene | Oxidant, e.g. $I_2$. |

References with respect to said luminescent compound - quencher systems are the following in the order given in the above Table.

- J. Chem. Ed., Vol. 62, Number 2, February 1985, p.165-166
- Römpps Chemie-Lexikon, 7. Auflage (1973) p. 1170 under the heading Fluoreszenzindikatoren.
- Physical Optics by Robert W. Wood, third ed., Optical Society of America Washington, DC, p. 658.

Some Phenoxazine dyes (e.g. resorufin) that have luminescence character obtain the quenching of their luminescence by acidification as described e.g. in Collection Csechoslov, Chem. Commun./ Vol. 34/ (1969), p. 221-228, particularly p. 226. According to the present invention the acidification proceeds image-wise e.g. by using a photo-sensitive substance, e.g. $CBr_4$ or $PbI_2$, yielding halogen photoradicals that react with a hydrogen donor to form a hydrogen halide acid.

- US-P 3,801,782 (column 5, lines 1-11). In said US-P document the photo-reduction of anthraquinone to form green fluorescing 9,10-dihydroxy-anthracene has been mentioned. The reverse reaction resulting in fluorescence reduction or quenching is possible by photo-oxidation using a substance acting as photo-oxidant, e.g. a photo-exposed bis-imidazolyl compound (ref. e.g. GB-P 1,345,331).

According to an example of the latter embodiment fluorescent compounds such as 9,10-dihydroxy-anthracene and 1,5-anthracenediol are photo-oxidized and loose their fluorescent properties by oxidation and transformation into the corresponding quinone.

Other substances that can produce a photo-oxidant are photolytically decomposing organic polyhalogen compounds, e.g. carbon tetrabromide and iodoform, and photolytically decomposing inorganic metal halides such as silver chloride, bromide or iodide or lead bromide or iodide.

According to a preferred embodiment the latent luminescent image is produced without wet processing step(s), so in a dry way. Optionally the reduction or quenching of the luminescence is speeded up by heat.

The reduction or quenching of fluorescence based on a reaction of a luminescent compound with an acid or based on a redox-reaction may be speeded up by heat and/or the presence of minor amounts of water already applied or present in the recording material in the exposure stage. Other substances that may speed up in some instances the luminescence quenching are heat-sensitive base-releasing agents as described e.g. in European Patent application (EPA) 0 120 306, and thermosolvents, also called heat solvents as described e.g. in US-P 3,347,675 - 3,438,776 - 3,667,959 - 4,740,446, in DE-A 3,339,810, in EP-A 0,119,615 and 0,122,512, in GB-P 2 156 091 and Research Disclosure 15027 (October 1976).

According to a particularly interesting embodiment the image-wise fluorescence quenching proceeds in a photosensitive thermally developable recording material for forming silver images, said material comprising :

(A) a substantially light-insensitive silver salt of an organic acid,

(B) an amount of photolytically reducible silver halide, the silver halide being formed optionally from the organic silver salt and being in catalytic proximity with the silver salt, and

(C) at least one fluorescent reducing agent capable of undergoing a decrease or loss of its fluorescence power on oxidation and capable of reacting in an oxidation-reduction reaction with the substantially light-insensitive silver salt upon heating under the catalytic influence of the photolytic silver formed on exposure of the photosensitive recording material. Such material is derived from photographic thermally developable silver salt recording materials that are known e.g. from GB-P 1,110,046, US-P 3,457,075 and 3,706,565. The silver image obtained on development serves as a mask for residual fluorescent reducing agent left in the photo-exposed areas; in the non-exposed areas the fluorescent reducing agent remains unaffected.

According to a particularly interesting embodiment of the present invention a method for recording and detecting a pattern of ionizing radiation is provided which method comprises the steps of :

(1) image-wise exposing to ionizing radiation an element containing at least one phosphor that converts said ionizing radiation into photochemically active radiation,

(2) image-wise exposing to said photochemically active radiation a recording material being a photosensitive thermally developable recording material comprising :

(A) a substantially light-insensitive silver salt of an organic acid,

(B) photo-sensitive silver halide in catalytic proximity with the light-insensitive silver salt, and

(C) at least one fluorescent reducing agent capable of loosing its fluorescence power on oxidation and capable of reacting upon heating in an oxidation-reduction reaction with the substantially light-insensitive silver salt under the catalytic influence of the silver formed from photo-exposed silver halide,

(3) subjecting the image-wise exposed photosensitive thermally developable recording material to a heat treatment resulting in the oxidation of the fluorescent reducing agent in conformity with a developed silver image whereby a latent fluorescent image is retained,

(4) exposing said latent image to radiation stimulating the fluorescent light emission of said retained reducing agent, and

(5) detecting a pattern of fluorescent light emitted by said latent image, characterized in that said fluorescent reducing agent is a sulfamino compound corresponding to the following general formula (I) :

$$R^1(-L^1= L^2)\text{-}NH\text{-}SO_2\text{-}X$$

wherein :

$L^1$ and $L^2$ each represent a substituted or unsubstituted methine group, forming together part of an at least partially unsaturated ring system, preferably aromatic carbocyclic ring system or heterocyclic ring system,

$R^1$ represents $OR^2$, $SR^2$ or $NHR^3$,

$R^2$ represents hydrogen or a substituent that in alkaline medium by hydrolysis can be replaced by hydrogen, e.g. an acyl group,

$R^3$ represents hydrogen, or a substituent selected from the group consisting of an alkyl, a cycloalkyl, an aralkyl, an aryl, an amino or a monovalent heterocyclic group including said groups in substituted form, or $R^3$ is a member which through the nitrogen atom of the above mentioned group $NHR^3$ completes with $L^1$ and optionally in conjunction with $L^2$ a heterocyclic ring system with at least one ring having 5-, 6- or 7 ring atoms, and

X is an organic substituent, e.g. represents a member selected from the group consisting of an alkyl, a cycloalkyl, an aralkyl, an aryl, an amino or a monovalent heterocyclic group including said groups in substituted form.

Particularly suited fluorescent reducing agents for use according to the present invention are within the scope of one of the following general formulae (II) or (III) :

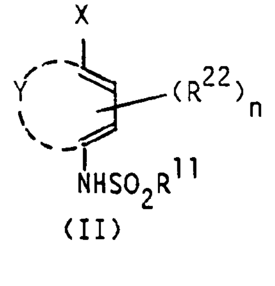

(II)

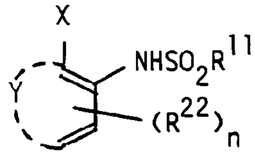

(III)

wherein :

$R^{11}$ represents a member selected from the group consisting of an alkyl, a cycloalkyl, an aralkyl, an aryl, an amino or a monovalent heterocyclic group including said groups in substituted form,

$R^{22}$ (same or different when a plurality of them is present) represents a substituent replacing hydrogen and is selected from the group consisting of halogen, cyano, an alkyl group, a cycloalkyl group, an aralkyl group, an aryl group, a heterocyclic group, an alkoxy group, an aryloxy group, an alkylthio group, an arylthio group, an acyl group, an acyloxy group, an alkyloxycarbonyl group, an aryloxycarbonyl group, an alkylsulfonyl group and an arylsulfonyl group including said groups in substituted form, or selected from the group consisting of NHCOR, CONHR, NHSO2R and SO2NHR wherein R is hydrogen or a substituent, or two of $R^{22}$ in adjacent position represent the necessary atoms to close a carbocyclic nucleus or ring system, e.g. a benzene ring,

X represents OH or $NHR^3$ wherein $R^3$ is hydrogen or $-SO_2R^{11}$ wherein $R^{11}$ has the same meaning as described above,

Y represents the necessary atoms to complete a carbocyclic nucleus or ring system, e.g. a naphthalene nucleus, or a benz-heterocyclic nucleus, e.g. a quinoline nucleus, also called a 1-benzazine nucleus, and

n is zero or an integer of 1 to 6.

Examples of sulfamino compounds within the scope of at least one of the general formulae (I) to (III) are given in Research Disclosure, February 1979, item 17842, US-P 4,360,581 and 4,782,004.

According to Research Disclosure February 1979, item 17842 sulfamino compounds within the scope of the present general formula (I) or (II) are used in photographic materials for colour diffusion transfer photography to scavenge oxidized electron transfer agents.

The synthesis of sulfamino compounds used according to the present invention proceeds by methods described in US-P 4,360,581 and 4,782,004.

According to US-P 4,360,581 said sulfamino compounds are used as electron donor compounds capable of reducing non-diffusing reducible colour providing compounds which release a diffusible dye under photographic development conditions.

According to US-P 4,782,004 said sulfamino compounds are combined with heat-developable photosensitive materials that contain a dye-releasing compound of reducing nature and are effective in inhibiting air oxidation thereof, reduce thereby fog or promote heat development to produce a dye image of high density.

In a particular recording material suited for use according to the present invention a recording layer provided on a support contains at least one sulfamino reducing agent according to general formula (I), preferably according to one of the general formulae (II) or (III), in operative contact with a substantially light-insensitive organic silver salt and a photosensitive silver halide which produces a catalyst upon light exposure to accelerate the reaction between the organic silver salt and the reducing agent, and a source of mercuric ions in an amount sufficient to provide a lighter image background after aging, light exposure and heating, than would be obtained in the complete absence of the mercuric ion and up to 0.07 moles of mercury per mole of silver salt. The mercuric ion may be introduced in the photographic material in any desired manner, e.g. according to onen of the embodiments described In GB-P 1 264 532. It has been found particularly convenient to introduce the mercuric ion in the form of mercuric halide or mercuric acetate.

By "operative contact" is meant here that said reducing sulfamino compound in the heating treatment of the method according to the present invention is capable of reducing the organic silver salt in the photo-exposed areas of the recording material.

By "substantially light-insensitive" it is not meant that the organic silver salt must be completely insensitive to light, but that it should at least be resistant to darkening under a one day diffuse sun-light exposure to prevent destruction of photographs already obtained by the defined method.

Preferred substantially light-insensitive silver salts are silver salts of long-chain fatty acids, e.g. silver behenate and silver stearate that are fairly stable to light, even in the presence of moisture. These salts also called silver soaps are conventiently prepared by precipitation with silver nitrate solution from aqueous solutions of the alkali metal soaps of the corresponding fatty acids and with or without co-precipitation of the fatty acid in any desired proportion. For transparent coatings the fatty acid content is restricted or omitted.

The silver halide can be added to the coating composition of the recording layer containing the components for the redox reaction or it can be formed in situ in the coating composition, e.g. by precipitation. In the latter case the silver ions of the silver halide essentially originate from the substantially light-insensitive silver salt. The halide ion (i.e. $Cl^-$, $Br^-$, $I^-$ or mixture thereof) for the production of the photosensitive silver halide in situ can be supplied in different manners.

One convenient procedure involves briefly exposing the surface of the silver salt particles or coating to the vapours of one or more halogen acids, the extent of the reaction being controlled by adjusting both the concentration of the vapour and the time of the exposure.

According to a preferred procedure the halide ion is provided from a liquid medium containing e.g. mercuric

halide. Other methods for forming the light-sensitive silver halide in situ are described in GB-P 1 366 298.

According to an other procedure the photosensitive silver halide is formed in the presence of an amphiphilic copolymer serving as silver halide peptizer as described in US-P 3,706,565, and redispersed in a non-aqueous medium comprising the organic substantially light-insensitive silver salt.

Other ingredients useful in the manufacture of a recording material for producing a retained latent fluorescent image according to the present invention are ingredients commonly applied in photothermographic silver halide recording materials. In that connection are mentioned heat-sensitive alkali precursors, antifoggants, reducing agents other than the presently used fluorescent sulfamino compounds, silver toning agents, chemical sensitizing agents, spectral sensitizing agents, coating aids, filter dyes and anti-halation dyes, the latter dyes being applied underneath the recording layer or at the side of the support opposite the recording layer. For such ingredients reference is made e.g. to US-P 3,706,565, GB-P 1 264 532, 1 366 298 and Research Disclosure March 1989 item 29963. Particularly suitable heat-sensitive alkali-precursors are described in published EP-A 0 295 729.

For the manufacture of a recording material useful in the method according to the present invention the sulfamino reducing agent, the substantially light-insensitive organic silver salt, the photosensitive silver halide, either or not formed in situ, and optionally other ingredients of the type defined above are applied together with an appropriate binding agent being an organic polymer.

Examples of particularly useful binding agents are copolymers of vinyl chloride and vinyl acetate or of butadiene and styrene, polyethylene, polyamide, polyisobuthylene, polyvinyl chloride, polyvinylidene chloride, poly(N-vinyl pyrrolidinone), chlorinated rubber, polyvinyl butyral, polymers of acrylic or methacrylic esters or copolymers of derivatives of acrylic acid and methacrylic acid, derivatives of cellulose such as cellulose nitrate, cellulose acetate, cellulose propionate or mixtures thereof, celluloseacetobutyrate.

In a recording material for use according to the present invention the concentration of the sulfamino reducing agent with respect to the substantially light-insensitive organic silver salt may vary within wide limits.

A recording material suitable for use according to the method of the present invention preferably comprises said substantially light-insensitive organic silver salt and sulfamino reducing agent in a molar ratio of 1:1 to 1:10.

Generally, the weight proportions of the components of the redox reaction and the binding agent vary between 4:1 and 1:1. The recording material may be in the form of a self-sustaining layer, but is preferably applied to an appropriate support.

The support should be stable at the heat treatment (processing) temperature, which is preferably between 60 and 160 °C.

Suitable supports are e.g. sheets or webs of paper, cellulose acetate and synthetic organic resins such as polyethylene terephthalate.

The thickness of the photo-sensitive recording layer may be adapted to the requirements of the specific recording process operating with phosphor screens. A suitable layer thickness is between 5 and 100 μm.

According to a particular embodiment the support is double-side coated with a recording layer. In that case the support is preferably transparent for the light used in the photostimulation of the retained fluorescent image.

In a particular embodiment the recording layer is covered with an overcoat layer. The overcoat layer provides abrasion protection, resistance to deformation of the recording layer in the heat treatment processing and prevents or reduces the transfer of compounds to the contacting phosphor screens in the image-wise exposure. Useful overcoat materials are described in the already mentioned Research Disclosure March 1989 item 29963.

The reducing sulfamino compounds used according to the present invention are fluorescent under the influence of ultra-violet radiation in the wavelength range of 250 to 400 nm. Preferred reducing sulfamino compounds have an absorption maximum in the spectral region of 300 to 400 nm, i.e. in the region of longwave ultraviolet radiation. For example, by exposure to stimulating light in the range of 300 to 400 nm the luminescence is activated and fluorescent light with a wavelength maximum between e.g. 440 and 550 nm is emitted.

The heat treatment processing of the image-wise exposed recording material is simple in concept. The heating means may be, for example, a simple hot plate, a single or a pair of hot rollers, a heated drum, microwave heating and the like. Suitable apparatus are described e.g. in US-P 4,120,722, 4,112,280 and 4,148,575. The processing temperature is preferably in the range of 60 to 160 °C.

According to another particularly interesting embodiment the image-wise fluorescence quenching proceeds in a photosensitive thermally developable recording material for forming colour images, said material comprising :

(A) a substantially light-insensitive silver salt of an organic acid,

(B) an amount of photolytically reducible silver halide, the silver halide being formed optionally in catalytic amounts from the organic silver salt and being in catalytic proximity with said organic silver salt so that

after photo-exposure upon heating under the catalytic influence of the photolytic silver formed on exposure of the photosensitive recording material a silver image can be formed,

(C) at least one fluorescent colour coupler capable of undergoing a decrease or loss of its fluorescence power on colour coupling in an oxidation-reduction reaction with oxidized p-phenylenediamine reducing agent, and

(D) a p-phenylenediamine type colour developing agent.

Such colour developable recording material is derived from photographic thermally developable silver salt recording materials including a p-phenylenediamine type developer and colour coupler as described e.g. in US-P 3,531,286, 3,764,328 and 4,535,056. In such colour forming recording material the fluorescent colour coupler is e.g. the yellow biphenol colour-forming reducing agent described in US-P 4,535,056 or a fluorescent Alpha-naphthol type colour coupler capable of forming a quinonimine dye having an absorption spectrum different from its fluorescent light emission spectrum.

It has been established experimentally by us that 1-hydroxy-2-(N-arylcarbamoyl)-naphthalenes and especially 1-hydroxy-naphthoic acid anilide colour couplers have fluorescent properties, i.e. emit visible light when irradiated with ultra-violet light, and loose their fluorescent character when transformed by dye development of exposed silver halide into an indaniline dye, also called quinonimine dye.

Examples of such colour couplers correspond to the following general formula :

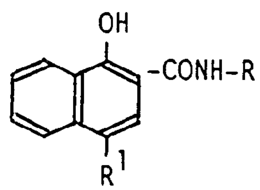

wherein :

R represents an aliphatic or aromatic substituent that may be further substituted, e.g. a C12-C16 alkyl group, phenyl or substituted phenyl group, and

$R^1$ represents hydrogen or a substituent that is releasable in a coupling reaction with oxidized p-phenylenediamine, e.g. a chlorine atom.

The dye development proceeds with a p-phenylenediamine type developing agent, e.g. a reducing agent (I) wherein R is ethyl, according to the following reaction scheme :

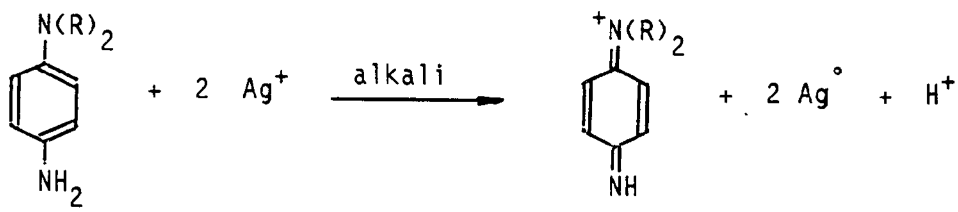


(I) (II)

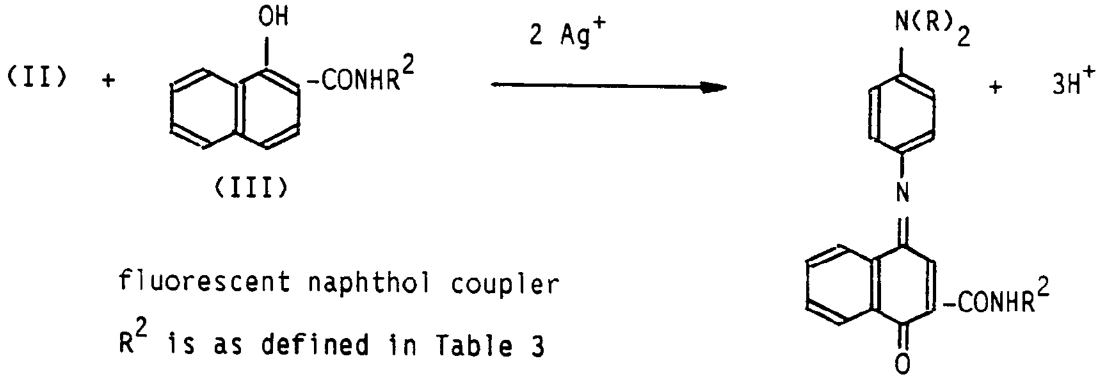


(III)

fluorescent naphthol coupler

$R^2$ is as defined in Table 3

(IV)

non-fluorescent cyan quinonimine dye

Said reaction and dye formation is known from conventional colour photography and has been applied in wet development monochrome radiography (see Example 3 of US-P 3,734,735).

Colour couplers of the 1-hydroxy-naphthoic acid anilide type that are particularly suited for use in the present method are listed with their structural formula in the following Table 3, wherein also the wavelength of the ultra-violet radiation used in the excitation and the emission-maximum of the fluorescent light of said couplers is given. The fluorescent light emission measurement was carried out having the couplers 1-4 dissolved in water and coupler 5 dissolved in dichloromethane.

TABLE 3

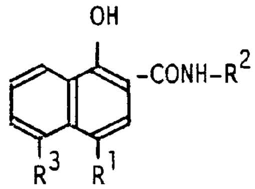

| No. | $R^1$ | $R^2$ | $R^3$ | U.V. (nm) | Emission maximum (nm) |
|---|---|---|---|---|---|
| 1 | H | 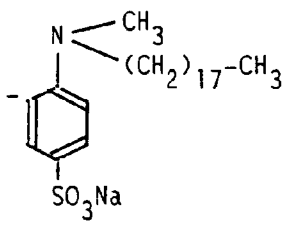 | H | 351 | 447 |
| 2 | H | 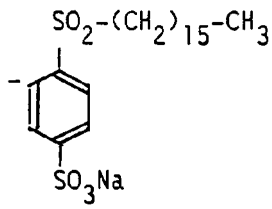 | H | 351 | 465 |
| 3 | H | 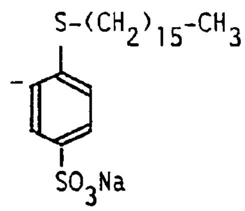 | H | 351 | 452 |
| 4 | H | 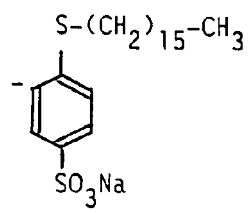 | 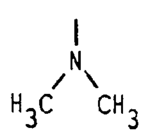 | 292 | 450 |
| 5 | Cl | $-(CH_2)_{15}-CH_3$ | H | 351 | 432 |

The synthesis of compounds 1, 2, 3 and 5 is well known to those skilled in the art.

The synthesis of compound 4 proceeded as follows :

1) 1-hydroxy-5-dimethylamino-naphthalene (I)

- 80 g of 1-hydroxy-5-amino-naphthalene (commercial product), 125 g of sodium hydrogen carbonate, 250 ml of water and 120 ml of dimethyl sulphate were stirred at 20°C for 3 h in 250 ml of ethyl acetate. Thereupon 100 ml of concentrated aqueous ammonium hydroxide were added whilst stirring was continued.

The supernatant organic layer was separated and dried on anhydrous sodium sulphate. The ethyl acetate was removed by evaporation and the residue was treated with n-hexane.

Yield : 56 g. Melting point : 106°C.

2) 1-hydroxy-2-carboxy-5-dimethylaminonaphthalene (II)

- 55 g of compound (I) were pulverized together with 123 g of potassium carbonate.

The powder-mixture was kept in a shaking autoclave under $CO_2$-pressure for 12 h at 175°C. The reaction mixture was dissolved in water and after treatment with charcoal, it was acidified. The precipitated product was separated by suction filtering and washed.

Yield : 61 g. Melting point : 215°C.

3) 1-hydroxy-2-carboxyphenyl-5-dimethylamino-naphthalene (III)

- 75 g of compound (II) together with 33 g of phenol, 70 ml of dioxan and 32 ml of $POCl_3$ were stirred for 2 h whilst heated on an oil-bath at 125°C. The reaction mixture was poured into ice-water. The residue was treated with a solution of sodium hydrogen carbonate and dried.

Recrystallization proceeded from ethylene glycol monomethyl ether.

Yield : 70 g. Melting point : 101°C.

4) Compound 4

- 7 g of compound (III) together with 166 g of 2-n-hexadecylthio-4-fluorosulpho-aniline were heated at 175°C under vacuum conditions. Hereby phenol was distilled off. The residue was poured into n-hexane. The formed precipitate was separated by suction filtering, washed with ethanol and dried.

Yield : 113 g. Melting point : 74°C.

The fluorosulpho-compound was saponified with an aqueous sodium hydroxide solution. Yield : 70 g. Melting point : 250°C.

Other fluorescent couplers loosing fluorescence on colour coupling are described in GB-P 945,542.

A halide ion such as $Br^-$ acting as quencher for fluorescent acridinium compound can be formed by UV-exposure of $CBr_4$ or silver bromide in the presence of a hydrogen donor as described e.g. in GB-P GB-P 1 140 524 and 1 573 909.

Fluorescence quenching $Co^{2+}$ ions can be formed in a radiation-sensitive composition containing a a photoreductant and a cobalt(III)complex by means of which on UV-exposure, and optionally accelerated by heat, $Co^{2+}$ ions are produced as described e.g. in Research Disclosure October 1974, Item 12617.

Iodine acting as oxidative quencher can be formed by X-ray exposure of $PbI_2$ or iodoform [ref. J. Chem. Ed., Vol. 50, Number 2, Feb. 1973, p. 93 and the book "Imaging Systems" by Kurt I. Jacobson and Ralph E. Jacobson - The Focal Press London and New York (1976), p. 239]. Hydrogen iodide acting as an acid can be formed by photo-exposure of iodoform, or lead iodide in the presence of a hydrogen donor, e.g. polyvinyl alcohol, (see the above mentioned book "Imaging Systems", p. 130-131 and 239-240). High atomic number elements iodine and lead have high X-ray stopping power, i.e. provide a high X-ray absorption so that no transformation of X-rays into UV-radiation is necessary and the recording can proceed without X-ray conversion phosphor screen(s), i.e. screenless. Such is particularly interesting for obtaining high resolution images as are desired in non-destructive testing (NDT).

Examples of compounds by means of which fluorescence quenchlng HCl, HBr or other strong acids can be formed by photochemical decomposition with UV-radiation are described in US-P 3,522,049 and 4,311,782. One of such compounds is 3,3,4,4,4-pentachloro-1-diazo-2-butanone prepared according to J.A.C.S. 63 (1941) p. 1438.

The photographic formation of HCl proceeds very well e.g. by reduction of $(C_6H_5COCH_2)_2TeCl_2$ with photochemically formed dihydrophenanthrenequinone as described in GB-P 1 573 909.

According to a special embodiment the recording material contains the luminescent substance(s) the fluorescence of which can be reduced or quenched in lightsensitive microcapsules. The fluorescence reducing or quenching substance(s) are contained in a permeable binder matrix in which the microcapsules are dispersed. By a photochemical reaction the content of the microcapsules becomes hardened, e.g. through the photoradical induced polymerization of ethylenically unsaturated polymerizable compound(s), and in the exposed areas the content of the microcapsules cannot be released by pressure and/or heat so that luminescent compound only in the areas wherein the microcapsule content remained unchanged can leave the microcapsules and enter into reaction with fluorescence reducing or quenching substance(s) present in the matrix. Examples of microcapsules contained in a heat-developable photographic material are given in EP 0,310,139 and JP N63/53,542 (see Chem. Abstr. 109 (1988), Ref. : 119746). According to the reverse of said special embodiment the substance(s) responsible for the quenching of the fluorescence are contained in the microcapsules and the luminescent compound(s) are contained in the binder matrix wherein the microcapsules are dispersed. In a practical embodiment the light-sensitive microcapsules comprise a core material containing eosine or fluoresceine, a photosensitive silver halide and an ethylenically unsaturated polymerizable compound and a shell containing a melamine derivative-aldhyde resin dispersed in a binder-matrix containing a diffusion resistant strong acid, e.g. polymeric sulphonic acid as derived e.g. from a polyester described in EP 0 078 559.

A survey of photothermographic silver halide materials that can be modified for producing a latent luminescent image by fluorescence quenching is given in Research Disclosure (1989), No. 299, item 29963.

The recording material for use according to the present invention comprises preferably the luminescent compounds and substance(s) wherefrom photochemically a fluorescence quencher(s) can be formed in a binder.

According to one embodiment the recording material represents a self-supporting web or sheet. The self-supporting web or sheet contains a single recording element or a combination of recording elements (multi-layer system). The multi-layer system can be produced by a multiple layer coating system, e.g. slide hopper coating, co-extrusion, or lamination using e.g. heat, pressure and/or an adhesive.

According to another embodiment said luminescent compounds and substance(s) for forming (a) fluorescence quencher(s) is (are) applied as (a) supported layer(s) on a sheet or web support. For example, the support is single or double-side coated, including the possibility of a combination of a plurality of recording layers of different composition. The support may be opaque or transparent to ultraviolet radiation and/or transparent or opaque to the emitted fluorescent light. Suitable supports include paper supports and film supports known from silver halide photography, e.g. cellulosetriacetate or polyethylene terephthalate supports. Other possible supports are aluminium supports and glass supports.

The binder may be hydrophilic or hydrophobic and is preferably itself poorly absorbing in the wavelength region of the photochemically active radiation emitted by the applied phosphor screen(s) and is not fluorescent upon irradiation with the excitation light used in the fluorescent image detection and read-out stage.

According to a preferred embodiment binder compounds are used having an intrinsic UV absorption below 250 nm.

Preferred polymeric hydrophobic binders are selected from the group consisting of homopolymers and copolymers of monomers which have copolymerizable olefinic double bonds, polyvinyl acetals and cellulose esters.

Examples of suitable poorly UV absorbing binder materials are waterinsoluble homo- and copolymers of vinyl esters such as vinyl acetate, vinyl chloride, styrene, (meth)acrylic esters, preferably polymethylmethacrylate, acrylonitrile, vinylacetals, e.g. butyral and formal, polycarbonates, polyesters, mixed polyester-carbonates, cellulose esters, e.g. cellulose acetate butyral and cellulose alkylsuccinate.

Examples of watersoluble polymers are poly(meth)acrylamide and N-substituted, e.g. with $HOCH_2$- substituent, poly(meth)acrylamides.

The total quantity of the combination of luminescent compounds and reactants forming a quencher may be 3 to 50 % by weight based on the binder and the coverage is e.g. in the range of 1 to 20 g per $m^2$. The lower limit is determined actually by the detection sensitivity of the electronic detection device, e.g. phototube or photomultiplier, by means of which signal amplifications coresponding with an amplification factor $10^7$ [ref. "Principles and Applications of Photochemistry" by Richard P. Wayne - Oxford University Press (1988), p. 165] can be obtained.

The reactant(s) for producing the quencher are preferably used in at least a double molar quantity with respect to the luminescent compound(s).

In an embodiment a fluorescent screen containing a phosphor emitting ultraviolet radiation when struck by said ionizing radiation is selected, said phosphor emitting ultraviolet radiation in the wavelength range wherein the conversion of luminescent compounds in the recording material into quenched luminescent compounds takes place rapidly and the photostimulation of the residual luminescent compounds proceeds with ultraviolet radiation of longer wavelength by means of which the quenching reaction proceeds substantially slower or does not proceed at all. The light emitted by the residual luminescent compound(s) is light of the visible light or infra-red light range that can be selectively detected with respect to the applied ultra-violet stimulating radiation by using e.g. an appropriate optical cut-off filter blocking the luminescence stimulating ultraviolet radiation. Preferably there is a wavelength difference of at least 30 nm between the radiation used in the photochemical reaction and the radiation used in the stimulating of the fluorescent light emission of the latent luminescent image.

The photosensitive compound(s) being directly or indirectly responsible for fluorescence reduction or quenching have preferably a sensitivity to ultraviolet light within a range of very short wavelengths with a maximum between about 200 and 310 nm and a neglegible sensitivity above 350 nm. The luminescent compounds left after image-wise quenching have preferably an absorption maximum above 350 nm, i.e. in the region of longwave ultraviolet radiation. For example, by exposure to stimulating light in the range of 350 to 440 nm the luminescence is activated and fluorescent light with a wavelength maximum between e.g. 440 and 660 nm is

emitted.

According to a first mode of photostimulation the fluorescence stimulating exposure of the above mentioned step (3) proceeds by a simultaneous overall exposure, i.e. an exposure by flooding the recording material containing said latent image with the fluorescence stimulating radiation.

According to a second mode of photostimulation the fluorescence stimulating exposure of the above mentioned step (3) proceeds successively, e.g. proceeds scanningwise by a successive point by point exposure of said latent image. That succesive exposure proceeds preferably with a linewise scanning laser beam.

Photostimulation of fluorescence may proceed with commonly known lamps (e.g. with high and low pressure mercury vapour lamps) or with a laser, e.g. a He-Cd laser, argon ion laser or tunable organic dye laser.

According to a first embodiment the detection of the emitted fluorescent light proceeds photographically on a photochemical recording material, e.g. a photosensitive silver halide emulsion recording material.

According to a second embodiment the detection of the emitted fluorescent light proceeds photoelectrically, e.g. by means of photoelectron emission in a phototube or photomultiplier providing electrical signals that may undergo an analog-digital conversion.

The electrical signals may be stored and subjected to digital processing for improving image quality or varying image contrast (ref. Research Disclosure, April 1985, item 25235).

The electrical analog or digital signals may be used for display on a cathode-ray tube.

A hard copy of the recorded information may be obtained by using the electrical signals stemming from the photoelectronic detection of the fluorescent light pattern to modulate a writing laser beam associated with a photosensitive recording material, e.g. electrophotographic recording material, thermographic recording material, e.g. for thermal transfer of dyes, or photosensitive silver salt recording material.

The stimulation of the latent luminescence image proceeds preferably in a linewise fashion which may be orthogonally or spirally.

Organic fluorescent compounds have normally photostimulation response times of the order of 10-20 nanoseconds so that, if sufficient laser beam power is used, they can be read-out substantially more rapidly than the comparatively slow stimulable phosphors.

A photochemically produced latent luminescence image need not be erased as is the case with the reusable stimulable storage phosphor screens so that the whole recording and reading system can be simplified and the operating time shortened by the omission of a time consuming erasure step.

The recording of the scanningwise emitted fluorescent light proceeds e.g. with a light-collector connected to a photomultimultiplier tube as illustrated e.g. in US-P 4 258 264, 4 748 326, 4 829 180 or 4 778 995.

The photochemical production of a latent luminescent image in a dry way offers the benefit of direct digitization of the photostimulated luminescent image and the possibility of image processing. Digitization of the electronic output signals produces quantized gray-scale values. If an 8-bit analog-digital convertor (ADC) is employed, the resultant image will contain as many as 256 quantization steps or shades of gray. When a 12-bit ADC is employed as for chest radiography, the resultant image can have up to 4,096 quantization levels.

The record containing the photochemically produced luminescent image can be read at a later time since there is no substantial dark-decay of the latent luminescent image and it can be read several times without decay in fluorescence level.

The fluorescence of the latent luminescent image obtained in the recording method according to the present invention is maintained as long as there is an input of stimulating light such being in contrast with the use of a stimulable storage phosphor screen of which the stored information is destroyed during the exposure with fluorescence stimulating radiation. By the fact that fluorescent light emission in the method according to the present invention can be maintained as long as desired the recording of fluorescent light can occur with photographic materials having a relatively poor photosensitivity, e.g. DRY SILVER (trade name) recording materials that are exposed to the fluorescent light only by using a proper cut-off filter excluding the exposure with the light used in the photostimulation of the latent luminescent image. A long exposure time will provide here the necessary light dose for image recording in said rather poorly photosensitive recording material. In the photostimulation of the latent luminescent image a flood light or simultaneous exposure is then used preferably.

The simultaneous exposure with stimulating light makes it likewise possible to record the image of fluorescent light with a still video camera, e.g. with CCD-array camera (CCD stands for charge coupling device) known to those skilled in the art.

The combination of phosphor fluorescent screen(s) and (a) recording material(s) for producing therein a latent luminescent-image according to the present invention can be used in classical clinical X-ray equipment operating with a front and back screen having the recording material for producing therein a latent luminescent image inbetween and in close contact with said screens during the X-ray exposure. A sheet representing the recording material used according to the present invention for obtaining a latent luminescent image may be arranged in a cassette between X-ray conversion screens.

For obtaining an improved input of photochemically active radiation in the recording material used according to the present invention for the production of a latent luminescent image at least one of the fluorescent phosphor screens is provided with a reflective backing layer for reflecting the photochemically active radiation so that the radiation emitted by the phosphor screen(s) can enter several times the recording material increasing thereby the probability of its absorption and photochemical action.

According to another embodiment the member of the recording material containing the photosensitive substance(s) used for forming (a) luminescence quenching compound(s) during the recording stands in contact with an element reflecting the photochemically active radiation or said member is present (coated) on a reflective backing, e.g. is coated on a vacuum deposited aluminium layer, that is highly reflective for UV-radiation. Such recording material is used in combination with only one phosphor screen.

In the medical X-ray field it is often necessary to provide information on soft tissue structures and bone-like structures simultaneously. For that purpose dual-energy techniques operating in a single shot X-ray exposure with a low energy absorbing front screen and a high energy absorbing back screen separated by X-ray beam hardening filter have been used in classical conventional screen-film assemblage exposure as well as in X-ray imaging with stimulable storage phosphor screens (ref. Dev P. Chakraborty and Gary T. Barnes in Med. Phys. 16 (1), Jan/Feb 1989, p. 7).

The production of low- and high-energy images that are acquired simultaneously avoids image misregistration between the low- and high-energy exposures that could occur by patient motion and makes that X-ray tube loading is less.

For the front screen preferentially absorbing the low-energy X-ray photons, useful in the imaging of the structure of soft tissue, low atomic number phosphors are used, whereas the higher energy part of the X-ray beam giving more information on the bone structure is absorbed or stopped in a back screen containing a higher atomic number phosphor.

Particularly in digital dual-energy mammography their is a need for storage phosphors that have a high difference in stopping power and high conversion efficiency of stored X-ray energy into light on photostimulatlon.

In the above mentioned periodical Med. Phys. 16 (1), p. 7-8 an energy sensitive cassette for dual-energy mammography has been described wherein the back imaging plate contains a commercial barium fluorobromide phosphor and the front plate contains a similar but no commercially available strontium fluorobromide phosphor. The selection of these phophors has been made in view of the K edges of Ba and Sr being respectively 37.4 and 16.1. The Ba K edge ensures high absorption efficiency of the barium fluorobromide phosphor above 38 keV, whereas the strontium fluorobromide plate is absorbing effectively in the X-ray region from 15 to 25 keV. In a practical assemblage the phosphor screens are separated by an X-ray hardening filter, wherein one of the screens, the screen most close to the X-ray source and called front screen, contains a photostimulable phosphor with low X-ray stopping power and the other screen contains another photostimulable phosphor having a substantially higher X-ray stopping power for higher energy X-ray photons than said phosphor of the front screen. The X-ray hardening of the interscreen filter material is made e.g. of copper.

It is within the scope of the present invention to provide a recording combination by means of which ionizing radiation of different energy is recorded simultaneously. Said combination includes a plurality of non-luminescent recording materials wherein photochemically a latent luminescent image can be produced, and wherein each of said recording materials during a single shot X-ray exposure is associated with a different X-ray conversion screen having different X-ray stopping power. For example, one phosphor screen being the front screen has an effective stopping power for 15 to 25 keV X-rays and the other screen being the back screen has an effective stopping power for X-rays of 30 keV and more.

The present method of recording an image of ionizing radiation includes autoradiography. An autoradiograph is a photographic record of the radioactive material within an object, produced by putting the object in contact with a photographic material. In the present method the radioactive object is placed in contact with or in close proximity with a phosphor screen emitting photochemically active radiation under the influence of the ionizing radiation stemming from the radioactivity in said object. The obtained pattern of photochemically active radiation is absorbed by the recording material wherein said latent luminescent image is formed. In general, autoradiography is a laboratory process applied to microtome sections of biological tissues which contain radioisotopes, metallographic samples and the like.

For use in autoradiography wherein normally only small samples are non-destructively tested it may be convenient to use phosphor screens containing the phosphor particles mixed with the compounds wherefrom the luminescence quencher(s) is (are) produced. The re-use of said phosphor screens is not possible when a permanent latent luminescent image is formed, but such is not that expensive when only small size phosphor screens have to be used, e.g. of the size of a microscope test object.

It is known that in radiographic non-destructive testing (NDT) methods, also called industrial radiography,

the exposure dose may be much higher than in medical radiography wherein living tissue is involved. There is no risk of image blurring in radiographing non-moving objects, so that relatively long exposure times can be applied.

According to an embodiment the recording material used according to the present invention is arranged in a cassette for photostimulable radiography as described e.g. in published European Patent application EP-A 0 309 874.

Since the recording materials used according to the present invention can be much more flexible than is the case with phosphor screen sheets having a thick phosphor coating their transport is much easier and the the transport systems in the radiographic apparatus wherein they are applied are less cumbersome.

In a particular embodiment said recording material is used in the form of a flexible web and exposed between and in contact with two prompt emitting X-ray conversion screens as illustrated in Fig. 1.

Said Fig. 1 represents a schematical cross-sectional view of an apparatus suited for use in the method according to the present invention. Element 1 is an X-ray exposure source emitting X-rays 2 modulated by the internal structure of a person 3 to be radiographed. The modulated X-ray beam strikes a front X-ray conversion screen 4 and a back X-ray conversion screen 5 both said screens emitting photochemically active radiation that is absorbed by the recording material in the form of a web 6. The photochemically active radiation absorbed in web 6 forms therein a latent luminescent image. The web is supplied by an unwinding roll 7 and is during the non-exposure stage conveyed between the screens 4 and 5 which allow passage for each new image frame. In the exposure stage the screens 4 and 5 make with their phosphor layer side intimate contact with the web 6.

The photostimulation of the photochemically obtained latent luminescent image in the web 6 proceeds with a laser beam emitted by the laser device 8, e.g. a He-Cd laser emitting continuously a 442 nm wavelength light or an argon ion laser emitting continuously ultraviolet radiation with a 351.1 or 363.8 nm wavelength or visible light with 488 nm wavelength. A light deflector 9 formed of a galvanometer mirror or the like deflects the laser beam so that it strikes the web 6 in linewise scanning fashion while the web 6 is wound up on the take up roll 10.

A photoelectronic detector 11 (e.g. photomultiplier tube) receives the fluorescent light which is separated from the stimulating light by a cut-off filter (not shown in the drawing). Instead of a photomultiplier tube a photoelectric amplification channel plate may be used as the fluorescent light detecting and amplifying means. There is no need for an erasing light source.

According to an embodiment suitable for the production of a series of rapidly following exposure frames (as in cineradiography) the read-out of the series of latent luminescent images proceeds in a later stage following the series of X-ray exposures, such being possible by the fact that the latent luminescent images obtained according to the present invention do not fade. For that purpose the part of the web containing a series of exposed image frames is wound on an accumulator roll and cut at the required length whereupon that part is read out.

The invention is illustrated by the following examples without however, limiting it thereto. All parts, ratios and percentages are by weight unless otherwise stated.

## EXAMPLE 1

A fine grain AgCl/gelatin-emulsion containing in finely dispersed state colour coupler No. 5 of Table 3 was coated on a subbed polyethylene terephthalate support in an amount sufficient to obtain on coating a coverage per $m^2$ of $3.81x10^{-4}$ mol of said coupler, 2.86 g of gelatin and $5.88x10^{-3}$ mol of silver chloride.

The single side coated recording material having at the rear side a black anti-reflection coating was arranged with its silver halide emulsion layer in contact with a phosphor screen converting X-rays in UV light corresponding with the emission spectrum given in Fig 2. In the graph of said Fig. 2 the relative emission intensity (R.E.I.) is in the ordinate and the wavelength in nm of the emitted fluorescent light is in the abscissa.

The phosphor screen contained undoped tantalate phosphor particles having monoclinic M structure. The empirical formula of said phosphor defined with atom gram coefficients is : $(Y_{0.998},Sr_{0.002},Li_{0.002})TaO_4$. For the preparation of said phosphor reference is made to published European Patent application 0 202 875. The phosphor was applied at a phosphor coverage of 600 g per $m^2$ in a polymethylmethacrylate binder on a 175 micron thick polyethylene terephthalate resin support.

The combination of said screen and photographic silver halide emulsion material containing uniformly distributed therein said colour coupler No. 5 was exposed to 80 keV X-rays through an aluminium step wedge.

The development proceeded with a developer having the following composition :

| | |
|---|---|
| N-hydroxyethyl-N-ethyl-p-phenylene diamine | 8 g |
| hydroxylamine | 1.5 g |
| sodium sulphite (anhydrous) | 4 g |
| potassium bromide | 1 g |
| potassium carbonate (anhydrous) | 65 g |
| water up to 1000 ml | |
| (pH about 10.8) | |

The development was carried out at 25°C for 2 min. After development the photographic material was subjected to an acid fixing treatment, rinsed and dried.

In the recording material a positive latent luminescent image was obtained by reducing the fluorescence in the photo-exposed portions wherein by development a silver image together with a blue dye image (absorption maximum at 675 nm) was formed.

The relative fluorescent light emission intensity (R.E.I. values) obtained by excitation at 351.1 nm were measured at a fluorescent light wavelength of 450 nm in the portions exposed to the light emitted by the phosphor screen and in the non-exposed portions. In said exposed and non-exposed portions R.E.I. values of 4.06 and 0.35 were measured respectively.

In the read-out photostimulation of the latent fluorescent image an Argon ion laser with its 351.1 nm emission line was used. The emitted visible fluorescent light was detected with a photomultiplier tube through a cut-off filter having a transmission larger than 90% at wavelength (lambda) larger than 420 nm and a transmission smaller than $10^{-5}$ at lambda smaller than 390 nm. The photomultiplier was provided with a bi-alkali (Na-K) photocathode (broad absorption at 400 nm). The obtained electrical signals were digitized and used to modulate a writing laser beam of He-Ne laser for exposure of a red-sensitized silver halide emulsion recording material which on development yielded a high quality copy of the original aluminium step wedge.

EXAMPLE 2

Preparation of the photosensitive thermally developable recording material

A homogeneous dispersion was made of 0.19 g of silver bromide grains, 1.79 g of silver behenate, 0.11 g of behenic acid in 34.5 g of a solvent mixture consisting of 5 parts of methyl ethyl ketone, 3 parts of ethanol and 2 parts of n-butanol whereto 3.36 g of polyvinyl butyral (BUTVAR B 79 - registered trade name of Monsanto) were added.

To the obtained dispersion were added 0.336 g of colour coupler compound No. 5 of Table 3 and 0.065 g of phthalazinone dissolved in 4 g of methylene chloride. The thus obtained coating composition was applied onto a 100 µm thick polyethylene terephthalate support at a total coverage of silver salts equivalent with 1.2 g of silver metal per $m^2$.

Onto the dried photosenstive layer a 5 % solution in actone of cellulosediacetate was applied to obtain a protective covering layer having in dry state a thickness of 3 µm.

Image-wise exposure

Before image-wise exposure the single side coated photosensitive thermally developable recording material was arranged with its protective layer into contact with a phosphor screen as defined in Example 1.

The combination of said screen and the above prepared photothermographic recording material was exposed to 80 keV X-rays through an aluminium step wedge.

Thermal development

For 7 seconds the exposed recording material was kept with its uncoated support side in contact with a hollow aluminium roller that was internally electrically heated to 118 °C.

In the recording material a negative silver image and a positive latent luminescent image was obtained.

The read-out and writing proceeded as in Example 1.

The recording material is suited for non-destructive testing in industrial radiography.

EXAMPLE 3

Preparation of the photosensitive thermally developable recording material

A homogeneous dispersion was made of 0.32 g of silver bromide grains, 2.74 g of silver behenate, 0.15 g of palmitic acid in 34.5 g of a solvent mixture of 29 g of methyl ethyl ketone, 17.4 g of ethanol and 11.6 g of n-butanol whereto 5.65 g of polyvinyl butyral (BUTVAR B 79 - registered trade name of Monsanto) were added.

To the obtained dispersion were added 1.45 g of the sulfamino compound 9 of US-P 4,360,581 dissolved in 6.1 g of methylene chloride. The thus obtained coating composition was applied onto a 100 μm thick polyethylene terephthalate support at a total coverage of silver salts equivalent with 1.2 g of silver metal per $m^2$.

Onto the dried photosenstive layer a 5 % solution in actone of cellulosediacetate was applied to obtain a protective covering layer having in dry state a thickness of 3 μm.

Image-wise exposure

Before image-wise exposure the single side coated photosensitive thermally developable recording material was arranged with its protective layer into contact with a phosphor screen as defined in Example 1.

The combination of said screen and the above prepared photothermographic recording material was exposed to 80 keV X-rays through an aluminium step wedge.

Thermal development

For 7 seconds the exposed recording material was kept with its uncoated support side in contact with a hollow aluminium roller that was internally electrically heated to 118 °C.

In the recording material a negative silver image and a positive latent luminescent image was obtained.

The read-out and writing proceeded as in Example 1.

The recording material is suited for non-destructive testing in industrial radiography.

EXAMPLE 4

Preparation of silverless print-out developable recording material

A solution was made of 10 g of co(vinyl butyral/vinyl alcohol) (molar ratio 90/10) in 100 ml of a solvent mixture of 50 % of methyl ethyl ketone, 30 % of ethanol and 20 % of n-butanol. After dissolving the copolymer the sodium salt of resorufin (7-hydroxy-3H-phenoxazin-3-one sodium salt) was added in such an excess that after stirring for 1 h a not dissolved residue was left which was removed by filtering. To the filtered solution 1.5 g of carbon tetrabromide were added. The thus obtained coating composition was doctor blade coated at a wet thickness of 200 μm onto a 100 μm thick subbed polyethylene terephthalate support.

Image-wise exposure and print-out imaging

Before image-wise exposure the single side coated photosensitive print-out developable recording material was arranged with its recording layer into contact with a phosphor screen as defined in Example 1.

The combination of said screen and the above prepared photothermographic recording material was exposed to 80 keV X-rays through an aluminium step wedge.

In the recording material a positive latent luminescent image was obtained by the image-wise quenching of the fluorescence of the resorufin. The quenching of the fluorescence proceeded actually by HBr, an acid formed by reaction of bromine radicals obtained from the photo-exposed $CBr_4$ and hydrogen atoms stemming from the vinyl alcohol groups in the binder polymer serving as hydrogen donor.

Read-out

The resorufin sodium salt has an excitation maximum at 583 nm. The read-out proceeded with the excitation light of the 514.5 nm line of an argon ion laser. The emission maximum of the fluorescent light is at 609 nm, which wavelength is separated from the excitation wavelength by a proper cut-off filter followed by a photodiode detector or photomultiplier yielding sequential electrical signals by scanning the image-wise recording material with the 514.5 nm line argon ion laser beam.

The above recording material is suited for use in industrial radiography operating with X-ray conversion

screens that are emitting ultra-violet radiation.

By the use of iodoform, $PbBr_2$ or $PbI_2$ having a higher X-ray stopping power than $CBr_4$ the recording material obtained sufficient direct X-ray sensitivity for use in screenless industrial radiography.

## Claims

1. A method for recording an image of ionizing radiation comprising the steps of :
   (1) image-wise exposing to ionizing radiation an element containing at least one phosphor that converts said ionizing radiation into photochemically active radiation,
   (2) image-wise exposing a recording material to the thus obtained photochemically active radiation, said recording material containing non-differentially distributed (a) photo-quenchable luminescent compound(s) and/or (a) luminescent compound(s) in combination with (an) inorganic and/or organic compound(s) yielding by the action or intermediary of said photochemically active radiation (a) substance(s) reducing or quenching the luminescence of the latter luminescent compound(s), forming through said image-wise exposure a latent luminescent image of residual luminescent compound(s) in said recording material,
   (3) exposing said latent image to radiation stimulating the fluorescent light emission of said residual luminescent compound(s), and
   (4) detecting a pattern of fluorescent light produced by said exposure to stimulating radiation.

2. A method according to claim 1, wherein the formation of the latent luminescent image proceeds without wet processing step(s).

3. A method according to claim 1 or 2, wherein the formation of the latent luminescent image is speeded up by heat.

4. A method according to any of claims 1 to 3, wherein said photochemically active radiation emitted by said phosphor is in the wavelength range of 250 to 750 nm.

5. A method according to any of claims 1 to 4, wherein the fluorescence stimulating exposure of said latent image proceeds with radiation differing in wavelength or wavelength range from the radiation emitted by said phosphor(s).

6. A method according to any of claims 1 to 5, wherein the fluorescence stimulating exposure proceeds scanningwise by a laser beam.

7. A method according to any of claims 1 to 6, wherein the detection of the emitted fluorescent light proceeds photoelectrically thereby producing electrical signals.

8. A method according to claim 7, wherein said electrical signals are subjected to analog-digital conversion and stored in digital form.

9. A method according to any of the preceding claims, wherein said photo-quenchable luminescent compound(s) and/or (a) luminescent compound(s) in combination with (an) inorganic and/or organic compound(s) yielding by the action or intermediary of said photochemically active radiation (a) substance(s) reducing or quenchlng the luminescence of the latter luminescent compound(s) are present in a binder.

10. A method according to any of the preceding claims, wherein the recording material represents a self-supporting web or sheet.

11. A method according to claim 10, wherein the self-supporting web or sheet contains one or more recording layers.

12. A method according to any of the claims 1 to 9, wherein the recording material contains a support that is single or double-side coated with a recording layer(s).

13. A method according to claim 12, wherein the support is coated with a combination of a plurality of recording

layers of different composition.

**14.** A method according to any of claims 1 to 13, wherein the production of the latent luminescent image by image-wise reduction or quenching of fluorescence proceeds in a photosensitive thermally developable recording material for forming silver images, said material comprising :

(A) a substantially light-insensitive silver salt of an organic acid,

(B) photo-sensitive silver halide in catalytic proximity with the light-insensitive silver salt, and

(C) at least one fluorescent reducing agent capable of undergoing a decrease or loss of its fluorescence power on oxidation and capable of reacting upon heating in an oxidation-reduction reaction with the substantially light-insensitive silver salt under the catalytic influence of the silver formed from photo-exposed silver halide, and wherein said material after its image-wise exposure for development purposes is subjected to a heat treatment.

**15.** A method according to claim 14, wherein said fluorescent reducing agent is a sulfamino compound corresponding to the following general formula (I) :

$$R^1(-L^1=L^2)\text{-}NH\text{-}SO_2\text{-}X$$

wherein :

$L^1$ and $L^2$ each represent a substituted or unsubstituted methine group, forming together part of an at least partially unsaturated ring system, preferably aromatic carbocyclic ring system or heterocyclic ring system,

$R^1$ represents $OR^2$, $SR^2$ or $NHR^3$,

$R^2$ represents hydrogen or a substituent that in alkaline medium by hydrolysis can be replaced by hydrogen,

$R^3$ represents hydrogen, or a substituent selected from the group consisting of an alkyl, a cycloalkyl, an aralkyl, an aryl, an amino or a monovalent heterocyclic group including said groups in substituted form, or $R^3$ is a member which through the nitrogen atom of the above mentioned group $NHR^3$ completes with $L^1$ and optionally in conjunction with $L^2$ a heterocyclic ring system with at least one ring having 5-, 6- or 7 ring atoms, and

X is an organic substituent.

**16.** A method according to claim 15, wherein said fluorescent reducing agent is within the scope of one of the following general formulae (II) or (III) :

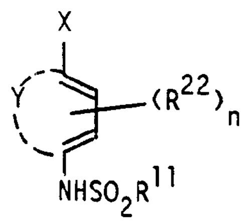

(II)

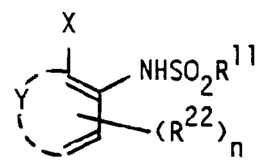

(III)

wherein :

$R^{11}$ represents a member selected from the group consisting of an alkyl, a cycloalkyl, an aralkyl, an aryl, an amino or a monovalent heterocyclic group including said groups in substituted form,

$R^{22}$ (same or different when a plurality of them is present) represents a substituent replacing hydrogen and is selected from the group consisting of halogen, cyano, an alkyl group, a cycloalkyl group, an aralkyl group, an aryl group, a heterocyclic group, an alkoxy group, an aryloxy group, an alkylthio group, an arylthio group, an acyl group, an acyloxy group, an alkyloxycarbonyl group, an aryloxycarbonyl group, an alkylsulfonyl group and an arylsulfonyl group including said groups in substituted form, or selected from the group consisting of NHCOR, CONHR, NHSO2R and SO2NHR wherein R is hydrogen or a substituent, or two of $R^{22}$ in adjacent position represent the necessary atoms to close a carbocyclic nucleus or ring system,

X represents OH or $NHR^3$ wherein $R^3$ is hydrogen or $-SO_2R^{11}$ wherein $R^{11}$ has the same meaning as described above,

Y represents the necessary atoms to complete a carbocyclic nucleus, or a benz-heterocyclic nucleus, and

n is zero or an integer of 1 to 6.

17. A method according to any of claims 1 to 13, wherein the production of the latent luminescent image by image-wise fluorescence reduction or quenching proceeds in a photosensitive thermally developable recording material for forming colour images said material comprising :

(A) a substantially light-insensitive silver salt of an organic acid,

(B) an amount of photolytically reducible silver halide, the silver halide being formed optionally in catalytic amounts from the organic silver salt and being in catalytic proximity with said organic silver salt so that after photo-exposure upon heating under the catalytic influence of the photolytic silver formed on exposure of the photosensitive recording material a silver image can be formed,

(C) at least one fluorescent colour coupler capable of undergoing a decrease or loss of its fluorescence power on colour coupling in an oxidation-reduction reaction with oxidized p-phenylenediamine reducing agent, and

(D) a p-phenylenediamine type colour developing agent, and wherein said material after its image-wise exposure is subjected to a heat treatment resulting in the development of a silver image and colour image.

18. A method according to any of claims 1 to 13, wherein the luminescent compound is 9,10-dihydroxy-anthracene the fluorescence of which is reduced by hydrogen abstraction (oxidation) with a photo-exposed bisimidazolyl compound.

19. A method according to any of the claims 1 to 18, wherein during the image-wise exposure to ionizing radiation said recording material is arranged between two screens having a phosphor layer contacting said recording material.

20. A method according to claim 19, wherein said two screens have different X-ray stopping power.

21. A method for recording an image of ionizing radiation which method comprises the steps of :

(1) image-wise exposing to ionizing radiation a recording material containing uniformly distributed therein (a) luminescent compound(s) and (an) inorganic and/or organic compound(s) yielding through the direct action or intermediary of said ionizing radiation (a) substance(s) reducing or quenching the luminescence of said luminescent compound(s) resulting in a latent luminescent image of residual luminescent compound(s) in said recording material,

(2) exposing said latent image to radiation stimulating the fluorescent light emission of said residual luminescent compound(s), and

(3) detecting a pattern of fluorescent light produced by said exposure to stimulating radiation.

22. A method according to claim 21, wherein the formation of the latent luminescent image proceeds without wet processing step(s).

23. A method according to claim 21 or 22, wherein the formation of the latent luminescent image is speeded up by heat.

24. A method according to any of claims 21 to 23, wherein the luminescent compound is 9,10-dihydroxy-anthracene the fluorescence of which is reduced by oxidation with photolytically formed iodine from X-ray exposed $PbI_2$ and/or iodoform.

25. A method according to any of claims 21 to 23, wherein the luminescent compound is resorufin (sodium salt) the fluorescence of which is quenched by hydrogen bromide and/or hydrogen iodide formed with X-ray exposed $PbBr_2$, iodoform and/or $PbI_2$ in the presence of a hydrogen donor.

26. A combination suitable for radiography comprising (1) at least one fluorescent screen containing at least one phosphor layer capable of emitting photochemically active radiation when irradiated by ionizing radiation, and 2) a photosensitive recording material containing uniformly distributed therein (a) photoquenchable luminescent compound(s) and/or luminescent compound(s) in combination with (a) compound(s) yielding by the action of said photochemically active radiation (a) compound(s) reducing or quenching the luminescence of the latter luminescent compound(s), the luminescence of said luminescent compounds being stimulable by radiation having a wavelength or wavelength range differing from the wavelength or wavelength range of the photochemically active radiation emitted by said screen(s).

27. A combination suitable for radiography according to claim 26, wherein said combination comprises said recording material arranged between two screens having a phosphor layer contacting said recording material.

28. A combination according to claim 27, wherein one of said screens has an effective stopping power for 15 to 25 keV X-rays and the other screen has an effective stopping power for X-rays of 30 keV and more.

29. A combination according to any of claims 27 to 29, wherein in said screen said phosphor layer is applied on a support or backing layer reflecting the photochemically active radiation emitted by said phosphor layer.

## Patentansprüche

1. Verfahren zur Aufzeichnung eines Bildes aus ionisierender Strahlung, das die folgenden Stufen umfaßt:
   (1) die bildmäßige Belichtung mit ionisierender Strahlung von einem Element, das mindestens einen Leuchtstoff enthält, der die ionisierende Strahlung in fotochemisch aktive Strahlung umwandelt,
   (2) die bildmäßige Belichtung eines Aufzeichnungsmaterials mit der also erzeugten, fotochemisch aktiven Strahlung, wobei das Aufzeichnungsmaterial folgende, auf nichtdifferentielle Weise verteilte Elemente enthält: eine oder mehrere fotolöschbare, lumineszierende Verbindungen und/oder eine oder mehrere lumineszierende Verbindungen zusammen mit einer oder mehreren anorganischen und/oder organischen Verbindungen, die durch die Wirkung oder Vermittlung der fotochemisch aktiven Strahlung eine oder mehrere Substanzen freisetzen, die die Lumineszenz der zuletzt erwähnten, lumineszierenden Verbindung(en) reduzieren oder löschen, wobei durch die bildmäßige Belichtung ein latentes, lumineszierendes Bild aus zurückbleibender(n), lumineszierender(n) Verbindung(en) im Aufzeichnungsmaterial erzeugt wird,
   (3) die Belichtung des latenten Bildes mit einer Strahlung, die die Emission von fluoreszierendem Licht der zurückbleibenden, lumineszierenden Verbindung(en) anregt, und
   (4) das Aufspüren eines Musters aus fluoreszierendem Licht, das durch die Belichtung mit anregender Strahlung erzeugt worden ist.

2. Verfahren nach Anspruch 1, dadurch gekennzeichnet, daß die Erzeugung des latenten, lumineszierenden Bildes ohne nasse Verarbeitungsstufe(n) erfolgt.

3. Verfahren nach Anspruch 1 oder 2, dadurch gekennzeichnet, daß die Erzeugung des latenten, lumineszierenden Bildes durch Wärme beschleunigt wird.

4. Verfahren nach irgendwelchem der Ansprüche 1 bis 3, dadurch gekennzeichnet, daß die durch den Leuchtstoff emittierte, fotochemisch aktive Strahlung im Wellenlängenbereich von 250 bis 750 nm liegt.

5. Verfahren nach irgendwelchem der Ansprüche 1 bis 4, dadurch gekennzeichnet, daß die fluoreszenzanregende Belichtung des latenten Bildes mit einer Strahlung erfolgt, die sich in Wellenlänge oder im Wellenlängenbereich von der durch den (die) Leuchtstoff(e) emittierten Strahlung unterscheidet.

6. Verfahren nach irgendwelchem der Ansprüche 1 bis 5, dadurch gekennzeichnet, daß die fluoreszenzanregende Belichtung scanmäßig mit einem Laserbündel erfolgt.

7. Verfahren nach irgendwelchem der Ansprüche 1 bis 6, dadurch gekennzeichnet, daß das Aufspüren des emittierten, fluoreszierenden Lichtes fotoelektrisch erfolgt, wobei elektrische Signale erzeugt werden.

8. Verfahren nach Anspruch 7, dadurch gekennzeichnet, daß die elektrischen Signale einer Analog-Digitalkonvertierung unterzogen und in digitaler Form gespeichert werden.

9. Verfahren nach irgendwelchem der vorstehenden Ansprüche, dadurch gekennzeichnet, daß die fotolöschbare(n), lumineszierende(n) Verbindung(en) und/oder eine oder mehrere lumineszierende Verbindungen zusammen mit einer oder mehreren anorganischen und/oder organischen Verbindungen, die durch die Wirkung oder Vermittlung der fotochemisch aktiven Strahlung eine oder mehrere Substanzen freisetzen, die die Lumineszenz der zuletzt erwähnten, lumineszierenden Verbindung(en) reduzieren oder löschen,

in einem Bindemittel enthalten sind.

**10.** Verfahren nach irgendwelchem der vorstehenden Ansprüche, dadurch gekennzeichnet, daß das Aufzeichnungsmaterial eine selbsttragende Bahn oder ein selbsttragendes Blatt darstellt.

**11.** Verfahren nach Anspruch 10, dadurch gekennzeichnet, daß die selbsttragende Bahn oder das selbsttragende Blatt eine oder mehrere Aufzeichnungsschichten enthält.

**12.** Verfahren nach irgendwelchem der Ansprüche 1 bis 9, dadurch gekennzeichnet, daß das Aufzeichnungsmaterial einen Träger enthält, auf den eine oder mehrere Aufzeichnungsschichten einseitig oder doppelseitig vergossen sind.

**13.** Verfahren nach Anspruch 12, dadurch gekennzeichnet, daß auf den Träger eine Kombination verschiedener Aufzeichnungsschichten mit einer unterschiedlichen Zusammensetzung vergossen ist.

**14.** Verfahren nach irgendwelchem der Ansprüche 1 bis 13, dadurch gekennzeichnet, daß die Erstellung des latenten, lumineszierenden Bildes durch bildmäßige Reduktion oder Löschung der Fluoreszenz in einem fotoempfindlichen, thermisch entwickelbaren Aufzeichnungsmaterial für die Erzeugung von Silberbildern erfolgt, dadurch gekennzeichnet, daß dieses Material folgendes enthält:

(A) ein wesentlich lichtunempfindliches Silbersalz einer organischen Säure,

(B) fotoempfindliches Silberhalogenid in katalytischer Nähe des lichtunempfindlichen Silbersalzes, und

(C) mindestens ein fluoreszierendes Reduktionsmittel, das imstande ist, bei Oxidation eine Verringerung oder den Verlust seines Fluoreszenzvermögens zu erfahren, und das bei Erhitzung in einer Oxidations-Reduktionsreaktion mit dem wesentlich lichtunempfindlichen Silbersalz unter dem katalytischen Einfluß des aus fotoebelichtetem Silberhalogenid erzeugten Silbers reagieren kann, und wobei das Material nach seiner bildmäßigen Belichtung für Entwicklungszwecke einer Wärmebehandlung unterzogen wird.

**15.** Verfahren nach Anspruch 14, dadurch gekennzeichnet, daß das fluoreszierende Reduktionsmittel eine Sulfaminverbindung ist, die der folgenden allgemeinen Formel (I) entspricht:

$$R^1(-L^1 = L^2)-NH-SO_2-X$$

in der bedeuten:

$L^1$ und $L^2$ je eine substituierte oder nichtsubstituierte Methingruppe, die zusammen einem zumindest teilweise ungesättigten Ringsytem, vorzugsweise einem aromatischen, carbocyclischen Ringsystem oder einem heterocyclischen Ringsystem, gehören, und

$R^1$ $OR^2$, $SR^2$ oder $NHR^3$,

$R^2$ Wasserstoff oder einen Substituenten, der in einem alkalischen Medium durch Hydrolyse mit Wasserstof ersetzt werden kann,

$R^3$ Wasserstoff, oder eine einwertige heterocyclischen Gruppe, eine Alkyl-, eine Cycloalkyl-, eine Aralkyl-, eine Aryl- oder eine Aminogruppe einschließlich dieser Gruppen in subsituierter Form,

oder $R^3$ ein Glied, das über das Stickstoffatom der obenerwähnten Gruppe $NHR^3$ mit $L^1$ und wahlweise in Verbindung mit $L^2$ ein heterocyclisches Ringsystem ergänzt, das mindestens einen Ring mit 5, 6 oder 7 Ringatomen hat, und

X einen organischen Substituenten.

**16.** Verfahren nach Anspruch 15, dadurch gekennzeichnet, daß das fluoreszierende Reduktionsmittel sich im Bereich einer der folgenden, allgemeinen Formeln (II) oder (III) befindet:

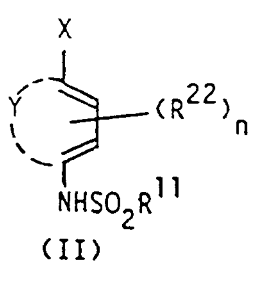

(II)

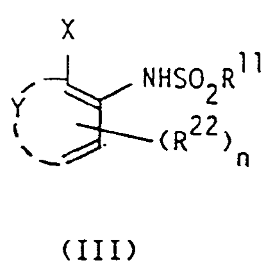

(III)

in denen bedeuten:
$R^{11}$ eine einwertige heterocyclische Gruppe, eine Alkyl-, eine Cycloalkyl-, eine Aralkyl-, eine Aryl- oder eine Aminogruppe einschließlich dieser Gruppen in subsituierter Form,
$R^{22}$ (gleich oder verschieden, wenn mehrere enthalten sind) einen Wasserstoff ersetzenden Substituenten aus der Reihe bestehend aus Halogen, einer heterocyclischen Gruppe, einer Cyan-, Alkyl-, Cycloalkyl-, Aralkyl-, Aryl-, Alkoxy-, Aryloxy-, Alkylthio-, Arylthio-, Acyl-, Acyloxy-, Alkyloxycarbonyl-, Aryloxycarbonyl-, Alkylsufonyl- und Arylsulfonylgruppe einschließlich dieser Gruppen in substituierter Form, oder NHCOR, CONHR, $NHSO_2R$ oder $SO_2NHR$, in denen R Wasserstof oder ein Substituent ist, oder zwei von $R^{22}$ in einer Nachbarposition die notwendigen Atome zum Schließen eines carbocyclischen Ringes oder Ringsystems,
X OH oder $NHR^3$, in der $R^3$ Wasserstof oder $-SO_2R^{11}$ ist, in der $R^{11}$ die gleiche Bedeutung hat wie oben beschrieben,
Y die notwendigen Atome zur Ergänzung eines carbocyclischen Ringes oder eines benzheterocyclischen Ringes, und
n 0 oder eine ganze Zahl von 1 bis 6.

**17.** Verfahren nach irgendwelchem der Ansprüche 1 bis 13, dadurch gekennzeichnet, daß die Erstellung des latenten, lumineszierenden Bildes durch bildmäßige Fluoreszenzreduktion oder -löschung in einem fotoempfindlichen, thermisch entwickelbaren Aufzeichnungsmaterial für die Erzeugung von Farbbildern erfolgt, dadurch gekennzeichnet, daß dieses Material folgendes umfaßt:
(A) ein wesentlich lichtunempfindliches Silbersalz einer organischen Säure,
(B) eine Menge fotolytisch reduzierbares Silberhalogenid, wobei das Silberhalogenid wahlweise in katalytischen Mengen aus dem organischen Silbersalz gebildet wird und sich in katalytischer Nähe des organischen Silbersalzes befindet, so daß nach der Fotobelichtung bei Erhitzung unter dem katalytischen Einfluß des fotolytischen Silbers, das bei der Belichtung des fotoempfindlichen Aufzeichnungsmaterials gebildet wird, ein Silberbild erzeugt werden kann,
(C) mindestens einen fluoreszierenden Farbkuppler, der imstande ist, eine Verringerung oder den Verlust seiner Fluoreszenzvermögens bei der Farbkupplung in einer Oxidations-Reduktionsreaktion mit einem oxidierten p-Phenylendiamin-Reduktionsmittel zu erfahren, und
(D) eine Farbentwicklersubstanz vom p-Phenylendiamintyp, und dadurch gekennzeichnet, daß das Material nach seiner bildmäßigen Belichtung einer Wärmebehandlung unterzogen wird, was zu der Entwicklung eines Silberbildes und Farbbildes führt.

**18.** Verfahren nach irgendwelchem der Ansprüche 1 bis 13, dadurch gekennzeichnet, daß die lumineszierende Verbindung 9,10-Dihydroxyanthracen ist, dessen Fluoreszenz durch Wasserstoffabsonderung (Oxidation) mit einer fotobelichteten Bisimidazolylverbindung reduziert wird.

**19.** Verfahren nach irgendwelchem der Ansprüche 1 bis 18, dadurch gekennzeichnet, daß während der bildmäßigen Belichtung mit ionisierender Strahlung das Aufzeichnungsmaterial zwischen zwei mit einer Leuchtstoffschicht versehenen Schirmen angeordnet wird, wobei die Leuchtstoffschicht mit dem Aufzeichnungsmaterial in Kontakt steht.

**20.** Verfahren nach Anspruch 19, dadurch gekennzeichnet, daß beide Schirme eine unterschiedliche Röntgen-Absorptionsfähigkeit haben.

**21.** Verfahren zur Aufzeichnung eines Bildes aus ionisierender Strahlung, das die folgenden Stufen umfaßt:
(1) die bildmäßige Belichtung mit ionisierender Strahlung von einem Aufzeichnungsmaterial, das folgende, auf gleichmäßige Weise darin verteilte Elemente enthält: eine oder mehrere lumineszierende Verbindungen und eine oder mehrere anorganische und/oder organische Verbindungen, die durch die direkte Wirkung oder Vermittlung der ionisierenden Strahlung eine oder mehrere Substanzen freisetzen, die die Lumineszenz der lumineszierenden Verbindung(en) reduzieren oder löschen, was zu einem latenten, lumineszierenden Bild aus zurückbleibender(n), lumineszierender(n) Verbindung(en) im Aufzeichnungsmaterial führt,
(2) die Belichtung des latenten Bildes mit einer Strahlung, die die Emission von fluoreszierendem Licht der zurückbleibenden, lumineszierenden Verbindung(en) anregt, und
(3) das Aufspüren eines Musters aus fluoreszierendem Licht, das durch die Belichtung mit anregender Strahlung erzeugt worden ist.

22. Verfahren nach Anspruch 21, dadurch gekennzeichnet, daß die Erzeugung des latenten, lumineszierenden Bildes ohne nasse Verarbeitungsstuf(en) erfolgt.

23. Verfahren nach Anspruch 21 oder 22, dadurch gekennzeichnet, daß die Erzeugung des latenten, lumineszierenden Bildes durch Wärme beschleunigt wird.

24. Verfahren nach irgendwelchem der Ansprüche 21 bis 23, dadurch gekennzeichnet, daß die lumineszierende Verbindung 9,10-Dihydroxyanthracen ist, dessen Fluoreszenz durch Oxidation mit fotolytisch erzeugtem Iod aus röntgenbelichtetem $PbI_2$ und/oder Iodoform reduziert wird.

25. Verfahren nach irgendwelchem der Ansprüche 21 bis 23, dadurch gekennzeichnet, daß die lumineszierende Verbindung Resorufin (Natriumsalz) ist, dessen Fluoreszenz durch Wasserstoffbromid und/oder Wasserstoffiodid gelöscht wird, das mit röntgenbelichtetem $PbBr_2$, Iodoform und/oder $PbI_2$ in Gegenwart eines Wasserstoffdonors erzeugt wird.

26. Eine für die Radiografie geeignete Kombination, die folgendes enthält:
(1) mindestens einen Verstärkerschirm, der mindestens eine Leuchtstoffschicht enthält, die imstande ist, fotochemisch aktive Strahlung zu emittieren, wenn sie mit ionisierender Strahlung bestrahlt wird, und
(2) ein fotoempfindliches Aufzeichnungsmaterial, das folgende, auf gleichmäßige Weise darin verteilte Elemente enthält: eine oder mehrere fotolöschbare, lumineszierende Verbindungen und/oder eine oder mehrere lumineszierende Verbindungen zusammen mit einer oder mehreren Verbindungen, die durch die Wirkung der fotochemisch aktiven Strahlung eine oder mehrere Verbindungen freisetzen, die die Lumineszenz der zuletzt erwähnten, lumineszierenden Verbindung(en) reduzieren oder löschen, wobei die Lumineszenz der lumineszierenden Verbindungen anregbar ist mit Strahlung einer Wellenlänge oder eines Wellenlängenbereichs, die bzw. der von der Wellenlänge oder dem Wellenlängenbereich der durch den (die) Schirm(e) emittierten, fotochemisch aktiven Strahlung unterschiedlich ist.

27. Eine für die Radiografie geeignete Kombination nach Anspruch 26, dadurch gekennzeichnet, daß sie das Aufzeichnungsmaterial enthält, das zwischen zwei mit einer Leuchtstoffschicht versehenen Schirmen angeordnet ist, wobei die Leuchtstoffschicht mit dem Aufzeichnungsmaterial in Kontakt steht.

28. Eine Kombination nach Anspruch 27, dadurch gekennzeichnet, daß einer dieser Schirme eine effektive Absorptionsfähigkeit für Röntgenstrahlen von 15 bis 25 keV hat und der andere Schirm eine effektive Absorptionsfähigkeit für Röntgenstrahlen von 30 keV und mehr hat.

29. Eine Kombination nach irgendwelchem der Ansprüche 27 bis 29, dadurch gekennzeichnet, daß im obenerwähnten Schirm die Leuchtstoffschicht auf einen Träger oder eine Rückschicht aufgetragen ist, der bzw. die die fotochemisch aktive, durch die Leuchtstoffschicht emittierte Strahlung reflektiert.

## Revendications

1. Procédé pour enregistrer une image de rayonnement ionisant comprenant les phases:
(1) de l'exposition, sous forme d'image, à un rayonnement ionisant d'un élément contenant au moins un luminophore convertissant le rayonnement ionisant en un rayonnement à action photochimique,
(2) de l'exposition, sous forme d'image, d'un matériau enregistreur au rayonnement à action photochimique ainsi obtenu, lequel matériau enregistreur contenant, distribués de manière non différentielle, un ou plusieurs composés luminescents photo-étouffables et/ou un ou plusieurs composés luminescents en combinaison avec un ou plusieurs composés inorganiques et/ou organiques dégageant par l'action ou l'intermédiaire du rayonnement à action photochimique une (des) substance(s) réduisant ou étouffant la luminescence du (des) dernier(s) composé(s) luminescent(s), formant par l'exposition sous forme d'image une image luminescente latente de composé(s) luminescent(s) résiduel(s) dans le matériau enregistreur,
(3) de l'exposition de l'image latente au rayonnement stimulant l'émission de lumière fluorescente du (des) composé(s) luminescent(s) résiduel(s), et
(4) de la détection d'un modèle de lumière fluorescente produit par l'exposition au rayonnement stimulant.

2. Procédé selon la revendication 1, caractérisé en ce que la formation de l'image luminescente latente s'effectue sans phase(s) de traitement humide.

3. Procédé selon la revendication 1 ou 2, caractérisé en ce que la formation de l'image luminescente latente est accélérée par la chaleur.

4. Procédé selon l'une quelconque des revendications 1 à 3, caractérisé en ce que le rayonnement à action photochimique émis par le luminophore se trouve dans le champ de longueurs d'onde de 250 à 750 nm.

5. Procédé selon l'une quelconque des revendications 1 à 4, caractérisé en ce que l'exposition stimulant la fluorescence de l'image latente s'effectue avec un rayonnement qui diffère en longueur d'onde ou en champ de longueurs d'onde du rayonnement émis par le(s) luminophore(s).

6. Procédé selon l'une quelconque des revendications 1 à 5, caractérisé en ce que l'exposition stimulant la fluorescence s'effectue par scanning au moyen d'un faisceau laser.

7. Procédé selon l'une quelconque des revendications 1 à 6, caractérisé en ce que la détection de la lumière fluorescente émise s'effectue de manière photoélectrique produisant ainsi des signaux électriques.

8. Procédé selon la revendication 7, caractérisé en ce que les signaux électriques sont soumis à une conversion analogique-numérique et emmagasinés sous forme digitale.

9. Procédé selon l'une quelconque des revendications précédentes, caractérisé en ce que le ou les composés luminescents photo-étouffables et/ou un ou plusieurs composés luminescents en combinaison avec un ou plusieurs composés inorganiques et/ou organiques dégageant par l'action ou l'intermédiaire du rayonnement à action photochimique une (des) substance(s) réduisant ou étouffant la luminescence du (des) dernier(s) composé(s) luminescent(s) sont présents dans un liant.

10. Procédé selon l'une quelconque des revendications précédentes, caractérisé en ce que le matériau enregistreur représente une bande ou une feuille autoporteuses.

11. Procédé selon la revendication 10, caractérisé en ce que la bande ou la feuille autoporteuses contiennent une ou plusieurs couches enregistreuses.

12. Procédé selon l'une quelconque des revendications 1 à 9, caractérisé en ce que le matériau enregistreur contient un support qui est enduit sur une face ou sur les deux faces d'une ou de plusieurs couches enregistreuses.

13. Procédé selon la revendication 12, caractérisé en ce que le support est enduit d'une combinaison de plusieurs couches enregistreuses à composition différente.

14. Procédé selon l'une quelconque des revendications 1 à 13, caractérisé en ce que la production de l'image luminescente latente par la réduction ou l'étouffement de la fluorescence sous forme d'image s'effectue dans un matériau enregistreur photosensible et thermiquement développable pour la formation d'images argentiques, lequel matériau comprenant:

(A) un sel d'argent essentiellement insensible à la lumière provenant d'un acide organique,

(B) de l'halogénure d'argent photosensible en proximité catalytique avec le sel d'argent insensible à la lumière, et

(C) au moins un agent réducteur fluorescent capable de subir une diminution ou une perte de son pouvoir fluorescent en cas d'oxydation et capable de réagir en cas d'échauffement dans une réaction d'oxydation-réduction avec le sel d'argent essentiellement insensible à la lumière sous l'influence catalytique de l'argent formé à partir d'halogénure d'argent photoexposé, et caractérisé en ce que le matériau est soumis à un traitement thermique après son exposition sous forme d'image à des fins de développement.

15. Procédé selon la revendication 14, caractérisé en ce que l'agent réducteur fluorescent est un composé sulfamino correspondant à la formule générale suivante (I):

$$R^1(-L^1 = L^2)\text{-NH-}SO_2\text{-X}$$

dans laquelle:
$L^1$ et $L^2$ représent chacun un groupe méthine substitué ou non substitué, faisant partie ensemble d'un système à noyau au moins partiellement insaturé, de préférence d'un système à noyau carbocyclique aromatique ou d'un système à noyau hétérocyclique,
$R^1$ représente $OR^2$, $SR^2$ ou $NHR^3$,
$R^2$ représente un atome d'hydrogène ou un substituant qui dans un milieu alcalin peut être remplacé par un atome d'hydrogène par hydrolyse,
$R^3$ représente un atome d'hydrogène ou un substituant choisi parmi un groupe alkyle, cycloalkyle, aralkyle, aryle, amino ou un groupe hétérocyclique monovalent, y compris ces groupes sous forme substituée, ou $R^3$ est un membre qui par l'atome de nitrogène du groupe $NHR^3$ susmentionné complète avec $L^1$ et éventuellement en conjonction avec $L^2$ un système à noyau hétérocyclique avec au moins un noyau ayant 5, 6 ou 7 atomes cycliques, et
X est un substituant organique.

**16.** Procédé selon la revendication 15, caractérisé en ce que l'agent réducteur fluorescent se trouve dans le domaine d'une des formules générales suivantes (II) ou (III):

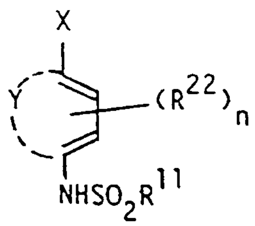
(II)

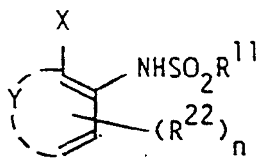
(III)

dans lesquelles:
$R^{11}$ représente un membre choisi parmi un groupe alkyle, cycloalkyle, aralkyle, aryle, amino ou un groupe hétérocyclique monovalent, y compris ces groupes sous forme substituée,
$R^{22}$ (identiques ou différents quand ils sont plusieurs) représente un substituant remplaçant un atome d'hydrogène et choisi parmi un halogène, un groupe cyano, alkyle, cycloalkyle, aralkyle, aryle, hétérocyclique, alkoxy, aryloxy, alkylthio, arylthio, acyle, acyloxy, alkyloxycarbonyle, aryloxycarbonyle, alkylsulfonyle et arylsulfonyle, y compris ces groupes sous forme substituée, ou choisi parmi NHCOR, CONHR, $NHSO_2R$ et $SO_2NHR$, dans lesquels R est un atome d'hydrogène ou un substituant, ou deux de $R^{22}$ en position adjacente représentent les atomes nécessaires pour fermer un noyau carbocyclique ou un système à noyau carbocyclique,
X représente OH ou $NHR^3$, dans lequel $R^3$ est un atome d'hydrogène ou $-SO_2R^{11}$, dans lequel $R^{11}$ a la même signification comme décrit ci-dessus,
Y représente les atomes nécessaires pour compléter un noyau carbocyclique ou un noyau benzhétérocyclique, et
n est 0 ou un nombre entier de 1 à 6.

**17.** Procédé selon l'une quelconque des revendications 1 à 13, caractérisé en ce que la production de l'image luminescente latente par la réduction ou l'étouffement de la fluorescence sous forme d'image s'effectue dans un matériau enregistreur photosensible et thermiquement développable pour la formation d'images en couleurs, lequel matériau comprenant:

(A) un sel d'argent essentiellement insensible à la lumière provenant d'un acide organique,

(B) une quantité d'halogénure d'argent photolytiquement réductible, l'halogénure d'argent étant formé éventuellement en quantités catalytiques à partir du sel d'argent organique et étant en proximité catalytique de ce sel d'argent organique, de façon à ce qu'une image argentique puisse être formée après la photoexposition quand on échauffe sous l'influence catalytique de l'argent photolytique formé à l'exposition du matériau enregistreur photosensible,

(C) au moins un copulant chromogène fluorescent capable de subir une diminution ou une perte de son pouvoir fluorescent en cas de copulation de couleurs dans une réaction d'oxydation-réduction avec un agent réducteur de p-phénylènediamine oxydée, et

(D) un développateur de couleurs de type p-phénylènediamine, et caractérisé en ce que le matériau est soumis, après son exposition sous forme d'image, à un traitement thermique résultant dans le développement d'une image argentique et d'une image en couleurs.

**18.** Procédé selon l'une quelconque des revendications 1 à 13, caractérisé en ce que le composé luminescent est le 9,10-dihydroxyanthracène dont la fluorescence est réduite par l'extraction d'hydrogène (oxydation) avec un composé de bisimidazolyle photoexposé.

**19.** Procédé selon l'une quelconque des revendications 1 à 18, caractérisé en ce que pendant l'exposition sous forme d'image à un rayonnement ionisant, le matériau enregistreur est arrangé entre deux écrans qui ont une couche de luminophore qui se trouve en contact avec le matériau enregistreur.

**20.** Procédé selon la revendication 19, caractérisé en ce que les deux écrans ont un pouvoir absorbant pour rayons X différent.

**21.** Procédé pour enregistrer une image de rayonnement ionisant, lequel procédé comprend les phases:
(1) de l'exposition, sous forme d'image, à un rayonnement ionisant d'un matériau enregistreur contenant, distribués de manière uniforme, un ou plusieurs composés luminescents et/ou un ou plusieurs composés inorganiques et/ou organiques dégageant par l'action directe ou l'intermédiaire du rayonnement ionisant une (des) substance(s) réduisant ou étouffant la luminescence du (des) composé(s) luminescent(s), résultant en une image luminescente latente du (des) composé(s) luminescent(s) résiduel(s) dans le matériau enregistreur,
(2) de l'exposition de l'image latente au rayonnement stimulant l'émission de lumière fluorescente du (des) composé(s) luminescent(s) résiduel(s), et
(3) de la détection d'un modèle de lumière fluorescente produit par l'exposition au rayonnement stimulant.

**22.** Procédé selon la revendication 21, caractérisé en ce que la formation de l'image luminescente latente s'effectue sans phase(s) de traitement humide.

**23.** Procédé selon la revendication 21 ou 22, caractérisé en ce que la formation de l'image luminescente latente est accélérée par la chaleur.

**24.** Procédé selon l'une quelconque des revendications 21 à 23, caractérisé en ce que le composé luminescent est le 9,10-dihydroxyanthracène dont la fluorescence est réduite par oxydation avec de l'iode formé photolytiquement à partir de $PbI_2$ et/ou de l'iodoforme exposés aux rayons X.

**25.** Procédé selon l'une quelconque des revendications 21 à 23, caractérisé en ce que le composé luminescent est de la résorufine (sel de sodium) dont la fluorescence est étouffée par du bromure d'hydrogène et/ou de l'iodure d'hydrogène formé avec du $PbBr_2$, de l'iodoforme et/ou du $PbI_2$ exposés aux rayons X en présence d'un donneur d'hydrogène.

**26.** Une combinaison appropriée pour la radiographie renfermant (1) au moins un écran fluorescent contenant au moins une couche de luminophore capable d'émettre un rayonnement photochimiquement actif quand elle est irradiée par un rayonnement ionisant, et (2) un matériau enregistreur photosensible contenant, distribués de manière uniforme, un ou plusieurs composés luminescents photo-étouffables et/ou un ou plusieurs composés luminescents en combinaison avec un ou plusieurs composés dégageant par l'action du rayonnement à action photochimique un (des) composé(s) réduisant ou étouffant la luminescence du (des) derniers composé(s) luminescent(s), la luminescence des composés luminescents étant stimulable par un rayonnement ayant une longueur d'onde ou une étendue de longueurs d'onde qui est différente de la longueur d'onde ou de l'étendue de longueurs d'onde du rayonnement à action photochimique émis par le(s) écran(s).

**27.** Une combinaison appropriée pour la radiographie selon la revendication 26, caractérisée en ce qu'elle renferme le matériau enregistreur arrangé entre deux écrans qui ont une couche de luminophore qui se trouve en contact avec le matériau enregistreur.

**28.** Une combinaison selon la revendication 27, caractérisée en ce qu'un des écrans a un pouvoir absorbant effectif pour des rayons X de 15 à 25 keV et que l'autre écran a un pouvoir absorbant effectif pour des rayons X de 30 keV et plus.

**29.** Une combinaison selon l'une quelconque des revendications 27 à 29, caractérisée en ce que dans l'écran susmentionné la couche de luminophore est appliquée sur un support ou sur une couche dorsale reflétant le rayonnement à action photochimique émis par la couche de luminophore.

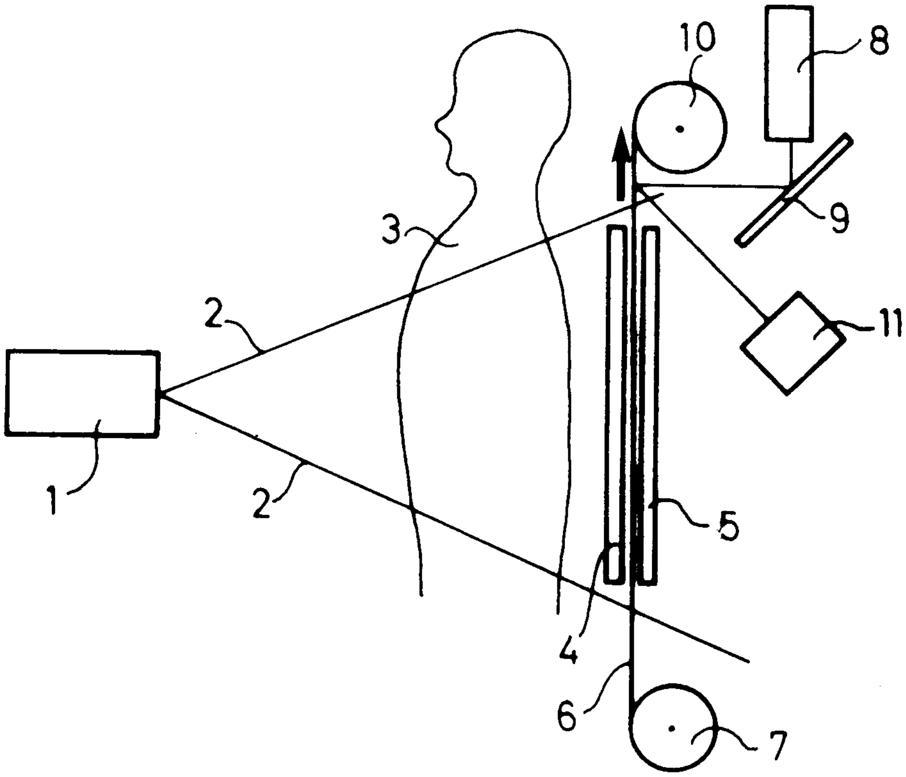


FIG. 1

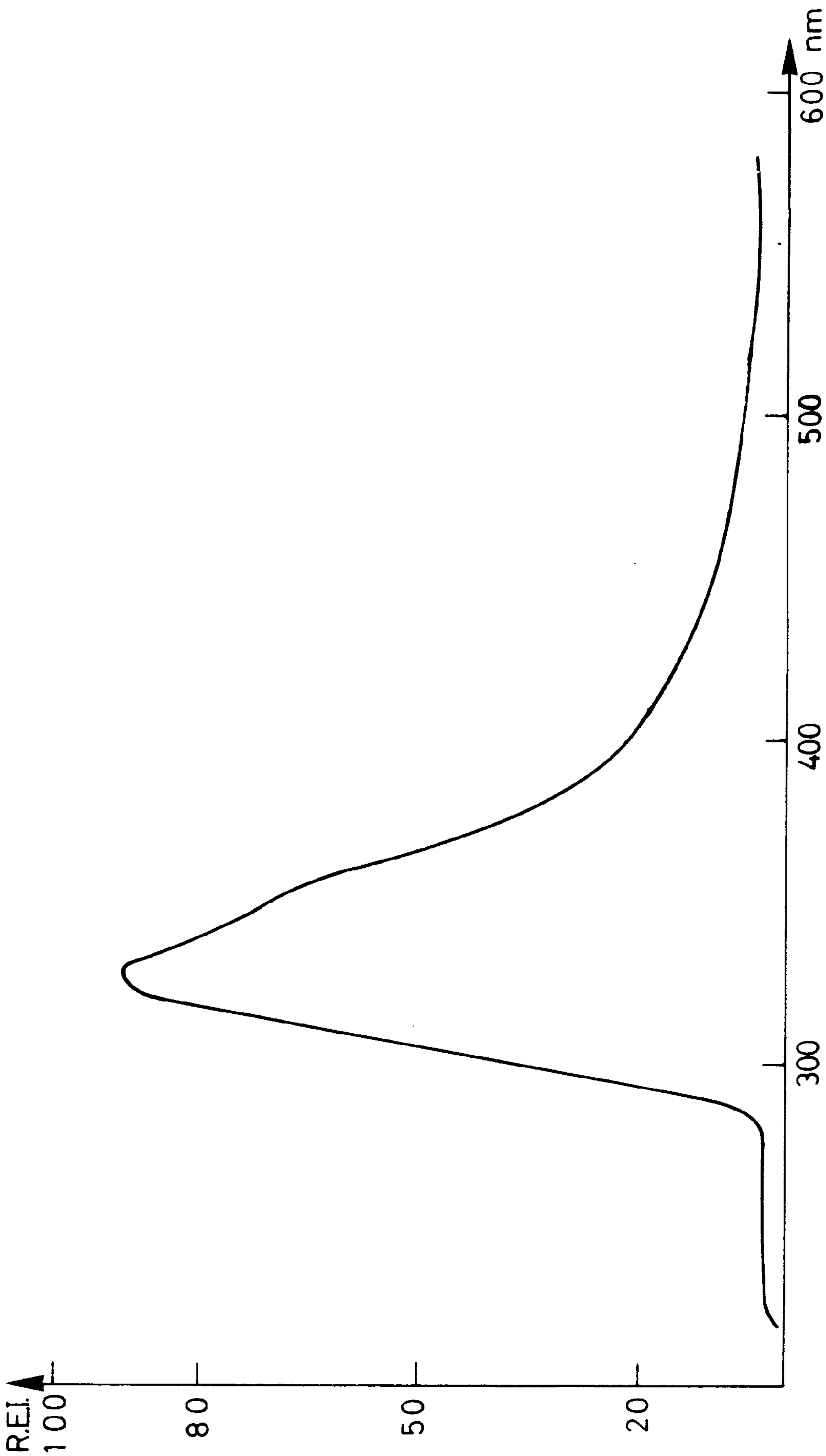


FIG. 2